(19) 

Europäisches
Patentamt
European
Patent Office
Office européen
des brevets

(11) **EP 4 648 419 A1**

(12) **EUROPEAN PATENT APPLICATION**
published in accordance with Art. 153(4) EPC

(43) Date of publication:
**12.11.2025 Bulletin 2025/46**

(21) Application number: **24738655.0**

(22) Date of filing: **02.01.2024**

(51) International Patent Classification (IPC):
*H04N 19/593* (2014.01)    *H04N 19/176* (2014.01)
*H04N 19/11* (2014.01)      *H04N 19/186* (2014.01)
*H04N 19/132* (2014.01)

(52) Cooperative Patent Classification (CPC):
**H04N 19/11; H04N 19/132; H04N 19/176;
H04N 19/186; H04N 19/593**

(86) International application number:
**PCT/KR2024/000013**

(87) International publication number:
**WO 2024/147584 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.01.2023 KR 20230000309**

(71) Applicant: **LG Electronics Inc.
Yeongdeungpo-gu
Seoul 07336 (KR)**

(72) Inventors:
• **CHOI, Jangwon
  Seoul 06772 (KR)**

• **LIM, Jaehyun
  Seoul 06772 (KR)**
• **PARK, Nae Ri
  Seoul 06772 (KR)**
• **YOO, Sunmi
  Seoul 06772 (KR)**
• **NAM, Jung Hak
  Seoul 06772 (KR)**
• **HONG, Myungoh
  Seoul 06772 (KR)**

(74) Representative: **Maikowski & Ninnemann
Patentanwälte Partnerschaft mbB
Postfach 15 09 20
10671 Berlin (DE)**

(54) **IMAGE ENCODING/DECODING METHOD AND DEVICE BASED ON INTRA PREDICTION, AND
RECORDING MEDIUM FOR STORING BITSTREAM**

(57)    An image encoding/decoding method and device are provided. The image decoding method according to the present disclosure may comprise the steps of: determining a first prediction mode and a second prediction mode of a current chroma block, wherein the first prediction mode and the second prediction mode are prediction modes for predicting the current chroma block on the basis of a luma block corresponding to the current chroma block; deriving a first chroma prediction block on the basis of the first prediction mode; deriving a second chroma prediction block on the basis of the second prediction mode; and deriving a final prediction block of the current chroma block on the basis of the first chroma prediction block and the second chroma prediction block, wherein the first chroma prediction block and the second chroma prediction block are derived on the basis of at least two among an upper reference area, a left reference area, and a left upper reference area neighboring the current chroma block.

**EP 4 648 419 A1**

# FIG. 16

```
                          ┌─────────┐
                          │  Start  │
                          └─────────┘
                               │
                               ▼
  ┌──────────────────────────────────────────────────────┐
  │ Determine first prediction mode and second prediction mode │        ~ S1610
  │            for current chroma block                   │
  └──────────────────────────────────────────────────────┘
                               │
                               ▼
  ┌──────────────────────────────────────────────────────┐
  │        Derive first chroma prediction block          │        ~ S1630
  │           based on first prediction mode             │
  └──────────────────────────────────────────────────────┘
                               │
                               ▼
  ┌──────────────────────────────────────────────────────┐
  │        Derive second chroma prediction block         │        ~ S1650
  │          based on second prediction mode             │
  └──────────────────────────────────────────────────────┘
                               │
                               ▼
  ┌──────────────────────────────────────────────────────┐
  │ Derive final prediction block of current chroma block │        ~ S1670
  │        based on first chroma prediction block and     │
  │          second chroma prediction block              │
  └──────────────────────────────────────────────────────┘
                               │
                               ▼
                          ┌─────────┐
                          │   End   │
                          └─────────┘
```

**Description**

[Technical Field]

The present disclosure relates to an image encoding/decoding method and apparatus, and a recording medium for storing a bitstream, and more specifically, relates to an image encoding/decoding method and apparatus based on intra prediction, and a recording medium for storing a bitstream generated by the image encoding method/apparatus of the present disclosure.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.
Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.
In addition, the present disclosure is to provide an image encoding/decoding method and apparatus for performing intra prediction in various linear model (LM) modes.
In addition, the present disclosure is to provide an image encoding/decoding method and apparatus for performing intra prediction in a LM mode based on a plurality of reference lines.
In addition, the present disclosure is to provide an image encoding/decoding method and apparatus for performing intra prediction in a LM mode based on a plurality of prediction blocks.
In addition, the present disclosure is to provide an image encoding/decoding method and apparatus for generating a prediction block with a combination of various LM modes.
In addition, the present disclosure is to provide a non-transitory computer-readable recording medium for storing a bitstream generated by the image encoding method or apparatus according to the present disclosure.
In addition, the present disclosure is to provide a non-transitory computer-readable recording medium for storing a bitstream which is received and decoded by the image decoding apparatus according to the present disclosure and used for image reconstruction.
In addition, the present disclosure is to provide a method for transmitting a bitstream which is generated by the image encoding method or apparatus according to the present disclosure.
The technical problems to be achieved in the present disclosure are not limited to the technical problems described above, and other technical problems not described may be clearly understood by those of ordinary skill in the art from the following descriptions.

[Technical Solution]

According to an embodiment of the present disclosure, as an image decoding method performed by an image decoding apparatus, the image decoding method, as an image decoding method performed by an image decoding apparatus, includes determining a first prediction mode and a second prediction mode for a current chroma block, wherein the first prediction mode and the second prediction mode are a prediction mode for predicting the current chroma block based on a luma block corresponding to the current chroma block; deriving a first chroma prediction block based on the first prediction mode; deriving a second chroma prediction block based on the second prediction mode; and deriving a final prediction block of the current chroma block based on the first chroma prediction block and the second chroma prediction block, wherein the first chroma prediction block and the second chroma prediction block may be derived based on at least two of an above reference area, a left reference area or an above-left reference area neighboring the current chroma block.
According to an embodiment of the present disclosure, the first prediction mode and the second prediction mode may be selected from a Cross-component Linear Model (CCLM) that performs prediction based on the luma block, a Multi-Model Linear Mode (MMLM) that performs prediction by dividing reconstructed neighbor samples into two categories, a Convolutional Cross-Component Model (CCCM) that performs prediction based on a convolutional filter, or a Gradient Linear Model (GLM) mode that performs prediction based on a gradient of a luma sample.

According to an embodiment of the present disclosure, the left reference area, the above reference area and the above-left reference area include N reference sample lines, and the N may have a value less than or equal to the size of the current chroma block.

According to an embodiment of the present disclosure, deriving the final prediction block may include determining a first weight applied to the first chroma prediction block, determining a second weight applied to the second chroma prediction block, and deriving the final prediction block by weighted summing the first chroma prediction block and the second chroma prediction block based on the first weight and the second weight.

According to an embodiment of the present disclosure, the first weight and the second weight may be determined based on at least one of a pre-determined value, a size of the current chroma block or a template matching cost.

According to an embodiment of the present disclosure, the first weight and the second weight may be determined based on a position of a current chroma sample included in the current chroma block.

According to an embodiment of the present disclosure, the first chroma prediction block and the second chroma prediction block may be derived further based on at least one of an above-right reference area or a bottom-left reference area neighboring the current chroma block.

According to an embodiment of the present disclosure, the method further includes determining a third prediction mode for the current chroma block and deriving a third chroma prediction block based on the third prediction mode, wherein the final prediction block may be derived based on the first chroma prediction block, the second chroma prediction block and the third chroma prediction block.

According to an embodiment of the present disclosure, an image encoding method performed by an image encoding apparatus may include determining a first prediction mode and a second prediction mode for the current chroma block as prediction modes for predicting a current chroma block based on a corresponding luma block, deriving a first chroma prediction block based on the first prediction mode, deriving a second chroma prediction block based on the second prediction mode and deriving a final prediction block of the current chroma block based on the first chroma prediction block and the second chroma prediction block.

According to an embodiment of the present disclosure, the first chroma prediction block and the second chroma prediction block may be derived based on at least two of an above reference area, a left reference area or an above-left reference area neighboring the current chroma block.

According to an embodiment of the present disclosure, it may be a computer-readable recording medium storing a bitstream generated by an image encoding method.

According to an embodiment of the present disclosure, as a method for transmitting a bitstream generated by an image encoding method, the image encoding method may be a bitstream transmission method that includes determining a first prediction mode and a second prediction mode for the current chroma block as prediction modes for predicting a current chroma block based on a corresponding luma block, deriving a first chroma prediction block based on the first prediction mode, deriving a second chroma prediction block based on the second prediction mode and deriving a final prediction block of the current chroma block based on the first chroma prediction block and the second chroma prediction block, wherein the first chroma prediction block and the second chroma prediction block are derived based on at least two of an above reference area, a left reference area or an above-left reference area neighboring the current chroma block.

[Advantageous Effects]

According to the present disclosure, an image encoding/decoding method and apparatus with improved encoding/decoding efficiency may be provided.

In addition, according to the present disclosure, an image encoding/decoding method and apparatus for performing intra prediction in various linear model (LM) modes may be provided.

In addition, according to the present disclosure, an image encoding/decoding method and apparatus for performing intra prediction in a LM mode based on a plurality of reference lines may be provided.

In addition, according to the present disclosure, an image encoding/decoding method and apparatus for performing intra prediction in a LM mode based on a plurality of prediction blocks may be provided.

In addition, according to the present disclosure, an image encoding/decoding method and apparatus for generating a prediction block with a combination of various LM modes may be provided.

In addition, according to the present disclosure, a non-transitory computer-readable recording medium for storing a bitstream generated by the image encoding method or apparatus according to the present disclosure may be provided.

According to the present disclosure, a non-transitory computer-readable recording medium for storing a bitstream which is received and decoded by the image decoding apparatus according to the present disclosure and used for image reconstruction may be provided.

According to the present disclosure, a method for transmitting a bitstream generated by the image encoding method or device according to the present disclosure may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 is a flowchart showing an intra prediction-based video/image encoding method.

FIG. 5 shows an exemplary diagram of the configuration of an intra predictor according to the present disclosure.

FIG. 6 is a flowchart showing an intra prediction-based video/image decoding method.

FIG. 7 shows an exemplary diagram of the configuration of an intra predictor according to the present disclosure.

FIG. 8 is a diagram showing a multi-reference line for intra prediction according to an embodiment of the present disclosure.

FIG. 9 is a diagram showing the position of neighbor samples used to derive a cross-component linear model (CCLM) parameter according to an embodiment of the present disclosure.

FIG. 10 is a diagram showing an example in which neighbor samples are classified into two groups to derive the parameter of a multi-model linear model (MMLM) according to an embodiment of the present disclosure.

FIG. 11 is a diagram showing corresponding luma samples and neighbor luma samples used for convolutional cross component model (CCCM) prediction according to an embodiment of the present disclosure.

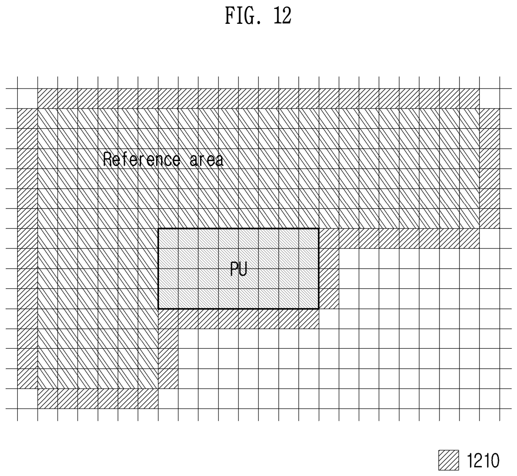

FIG. 12 is a diagram showing the reference sample area of a chroma block in CCCM prediction according to an embodiment of the present disclosure.

FIG. 13 is a diagram showing four gradient patterns used in a gradient linear model (GLM) prediction mode according to an embodiment of the present disclosure.

FIG. 14 is a diagram showing reference samples used for performing cross-component prediction according to an embodiment of the present disclosure.

FIG. 15 is a diagram showing a reference area used for performing cross-component prediction according to an embodiment of the present disclosure.

FIGS. 16 and 17 are a flowchart of an image encoding/decoding method according to an embodiment of the present disclosure.

FIG. 18 is a diagram showing reference samples used for performing cross-component prediction according to an embodiment of the present disclosure.

FIGS. 19 and 20 are a flowchart of an image encoding/decoding method according to an embodiment of the present disclosure.

FIG. 21 is a flowchart of an image encoding/decoding method using three chroma prediction blocks according to an embodiment of the present disclosure.

FIG. 22 is a flowchart of an image encoding/decoding method using two chroma prediction blocks according to an embodiment of the present disclosure.

FIG. 23 shows an exemplary diagram of a content streaming system to which an embodiment of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "video" may mean a set of images over time.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an $M \times N$ block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

In the present disclosure, "at least one of A, B and C" may mean "only A," "only B," "only C," or "any combination of A, B and C." In addition, "at least one of A, B or C" or "at least one of A, B and/or C" may mean "at least one of A, B and C."

Parentheses used in the present disclosure may mean "for example." For example, when indicated as "prediction (intra prediction)", "intra prediction" may be proposed as an example of "prediction". In other words, "prediction" in the present disclosure is not limited to "intra prediction", and "intra prediction" may be proposed as an example of "prediction". In addition, even when indicated as "prediction (intra prediction)", "intra prediction" may be proposed as an example of "prediction".

## Overview of the video coding system

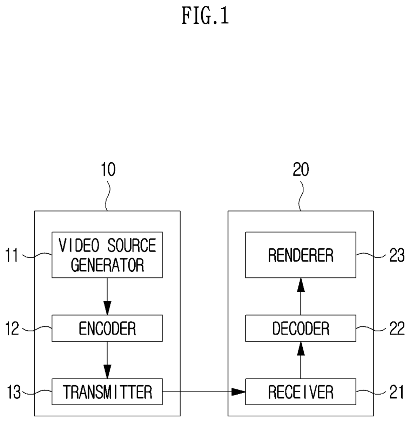

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoder 12, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

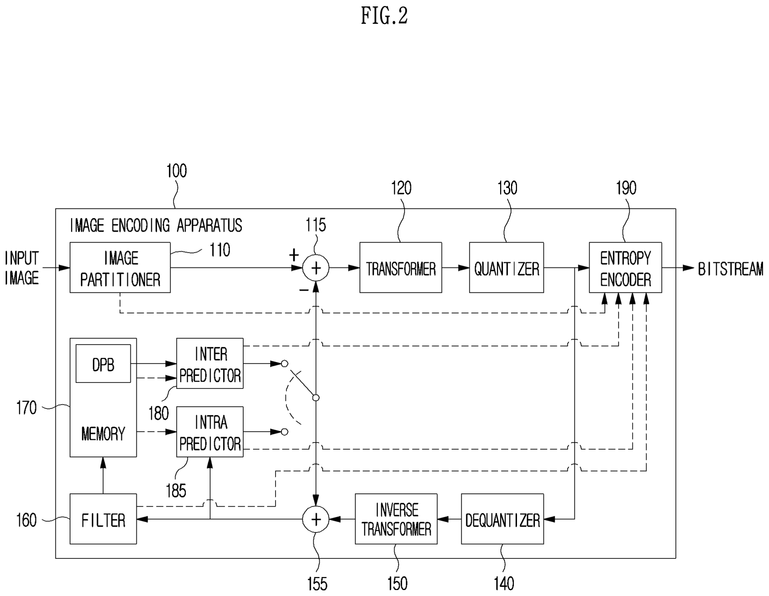

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT).

Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

Meanwhile, luma mapping with chroma scaling (LMCS) may be applied during picture encoding and/or reconstruction processes.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

## Overview of the image decoding apparatus

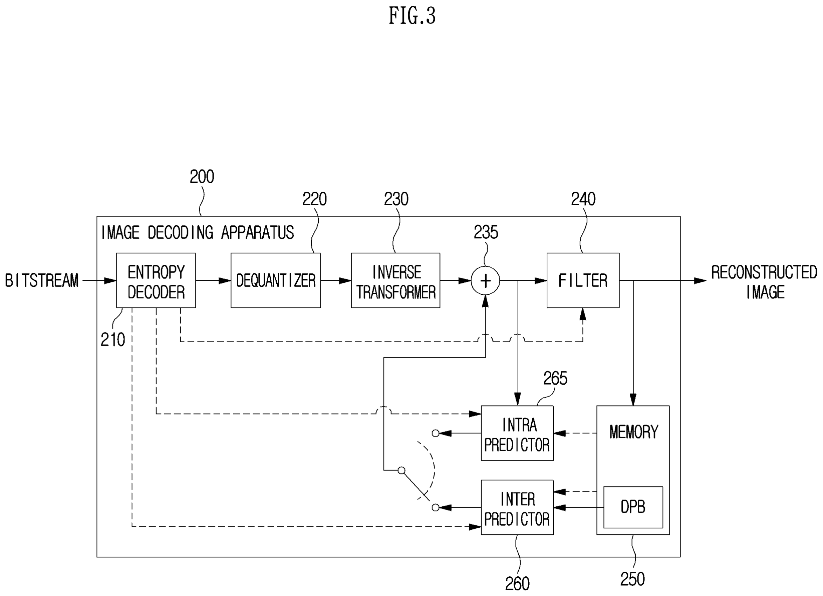

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

## Overview of Intra Prediction

Hereinafter, intra prediction according to the present disclosure will be described.

Intra prediction may refer to a prediction method which generates prediction samples for the current block based on reference samples within the picture to which the current block belongs (hereinafter, the current picture). When intra prediction is applied to the current block, neighboring reference samples to be used for intra prediction of the current block may be derived. The neighboring reference samples of the current block may include a total of $2 \times nH$ samples neighboring/adjacent to the left boundary and neighboring the bottom-left of the current block of $nW \times nH$ size, a total of $2 \times nW$ samples adjacent to the top boundary and neighboring the top-right of the current block, and one sample neighboring the top-left of the current block. Alternatively, the neighboring reference samples of the current block may include top neighboring samples of multiple columns and left neighboring samples of multiple rows. Additionally, the neighboring reference samples of the current block may include a total of nH samples neighboring a right boundary of the current block of a size of nWxnH, a total of nW samples neighboring a bottom boundary of the current block, and one sample neighboring a bottom-right of the current block.

However, some of the neighboring reference samples of the current block may not yet be decoded or may not be available. In this case, the decoder may construct the neighboring reference samples for prediction by substituting the unavailable samples with available samples. Alternatively, neighboring reference samples for prediction may be constructed through interpolation of the available samples.

When neighboring reference samples are derived, (i) prediction sample may be derived based on the average or interpolation of the neighboring reference samples of the current block, and (ii) prediction sample may be derived based on reference sample located in a specific (prediction) direction for prediction sample among the neighboring reference samples of the current block. Case (i) may be referred to as a non-directional mode or a non-angular mode, and case (ii) may be referred to as a directional mode or an angular mode.

Additionally, the prediction sample may be generated through interpolation between a first neighboring sample located in the prediction direction of the intra prediction mode of the current block and a second neighboring sample located in the opposite direction based on the prediction target sample of the current block among the neighboring reference samples. The above-described case may be referred to as linear interpolation intra prediction (LIP).

Additionally, chroma prediction samples may be generated based on luma samples using a linear model. This case may be called Linear Model (LM) mode.

Additionally, a temporary prediction sample of the current block may be derived based on filtered neighboring reference samples, and a prediction sample of the current block may be derived by calculating a weighted sum of at least one of a reference sample derived according to the intra prediction mode among the conventional neighboring reference samples, i.e. unfiltered neighboring reference samples, and the temporary prediction sample. This case is referred to as Position-dependent intra prediction (PDPC).

Additionally, a reference sample line with the highest prediction accuracy among the multiple neighboring reference sample lines of the current block may be selected, and a prediction sample may be derived using a reference sample located in the prediction direction in the corresponding line. In this case, information about the used reference sample line (i.e., intra_luma_ref_idx) may be encoded and signaled in the bitstream. In this case, it is referred to as multi-reference line intra prediction (MRL) or MRL-based intra prediction. When MRL is not applied, reference samples may be derived from a reference sample line directly adjacent to the current block, and in this case, information about the reference sample line may not be signaled.

Additionally, the current block may be divided into vertical or horizontal subpartitions, and intra prediction may be performed based on the same intra prediction mode for each subpartition. In this case, neighboring reference samples for intra prediction may be derived for each subpartition unit. In other words, the reconstructed sample of the previous subpartition in the encoding/decoding order may be used as the neighboring reference sample of the current subpartition. In this case, the intra prediction mode for the current block is applied identically to the subpartitions, and the neighboring reference sample are derived and used for each subpartition unit, thereby intra prediction performance may be improved in some cases. This prediction method is referred to as intra sub-partitions (ISP) or ISP-based intra prediction.

The intra prediction methods described above may be referred to by various terms, such as intra prediction type or additional intra prediction mode, to distinguish them from directional or non-directional intra prediction mode. For example, the intra prediction method (i.e., intra prediction type or additional intra prediction mode, etc.) may include at least one of the above-described LIP, LM, PDPC, MRL, or ISP. A general intra prediction method that excludes specific intra prediction type such as the LIP, the LM, the PDPC, the MRL, the ISP, etc. may be referred to as a normal intra prediction type. The normal intra prediction type may be generally applied when the specific intra prediction type described above is not used, and prediction may be performed based on the intra prediction mode described above. Meanwhile, post-processing filtering may be performed on the derived prediction sample when necessary.

Specifically, the intra prediction procedure may include an intra prediction mode/type determination step, a neighboring reference sample derivation step, and an intra prediction mode/type-based prediction sample derivation step. Additionally, a post-filtering step may be performed on the derived prediction sample when necessary.

Meanwhile, in addition to the intra prediction types described above, affine linear weighted intra prediction (ALWIP) may be used. The ALWIP may also be referred to as linear weighted intra prediction (LWIP) or matrix weighted intra prediction or matrix-based intra prediction (MIP). When MIP is applied to a current block, prediction samples for the current block may be derived by i) using neighboring reference samples on which an averaging procedure has been performed, ii) performing a matrix-vector multiplication procedure, and iii) further performing a horizontal/vertical interpolation procedure when necessary. Intra prediction modes used for MIP may be configured differently from those used in LIP, PDPC, MRL, ISP intra prediction, or normal intra prediction described above. The intra prediction mode for MIP may be referred to as the MIP intra prediction mode, MIP prediction mode, or MIP mode. For example, the matrix and offset used in the matrix-vector multiplication may be set differently depending on the intra prediction mode for MIP. Here, the matrix may be referred to as (MIP) weight matrix, and the offset may be referred to as the (MIP) offset vector or (MIP) bias vector. A specific MIP method will be described later.

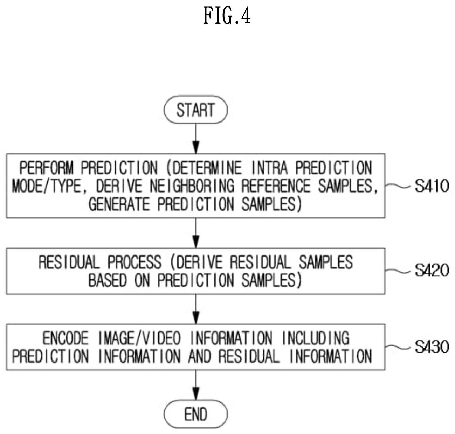

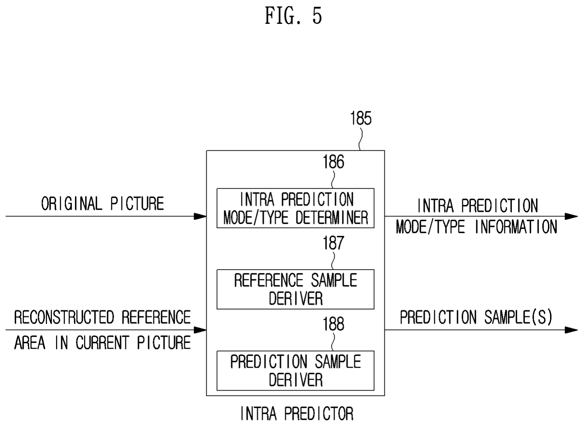

The block reconstruction procedure based on intra prediction and the intra predictor in the encoding apparatus will be described later with reference to FIG. 4 and FIG. 5.

FIG. 4 is a flowchart showing an intra prediction-based video/image encoding method.

The encoding method of FIG. 4 may be performed by the image encoding apparatus of FIG. 2. Specifically, step S410 may be performed by the intra predictor 185, and step S420 may be performed by the residual processor. Specifically, step S420 may be performed by the subtractor 115. Step S430 may be performed by the entropy encoder 190. The prediction information in step S430 may be derived by the intra predictor 185, and the residual information in step S430 may be derived by the residual processor. The residual information refers to information about the residual samples. The residual information may include information on the quantized transform coefficients of the residual samples. As described above, the residual samples are derived as transform coefficients through the transformer 120 of the image encoding apparatus, and the transform coefficients may be derived as quantized transform coefficients through the quantizer 130. The information on the quantized transform coefficients may be encoded in the entropy encoder 190 through the residual coding process.

The image encoding apparatus may perform intra prediction for the current block S410. The image encoding apparatus may determine the intra prediction mode/type for the current block, may derive neighboring reference samples of the current block, and may generate prediction samples within the current block based on the intra prediction mode/type and the neighboring reference samples. Here, the processes of determining the intra prediction mode/type, deriving the neighboring reference samples, and generating the prediction samples may be performed simultaneously, or one process may be performed before another.

FIG. 5 shows an exemplary diagram of the configuration of an intra predictor 185 according to the present disclosure.

As shown in FIG. 5, the intra predictor 185 of the image encoding apparatus may include an intra prediction mode/type determiner 186, a reference sample deriver 187, and/or a prediction sample deriver 188. The intra prediction mode/type determiner 186 may determine the intra prediction mode/type for the current block. The reference sample deriver 187 may derive the neighboring reference samples of the current block. The prediction sample deriver 188 may derive the prediction samples of the current block. Meanwhile, although not illustrated, when the prediction sample filtering process which will be described later is performed, the intra predictor 185 may further include a prediction sample filter (not shown).

The image encoding apparatus may determine the intra prediction mode/type applied to the current block among a plurality of intra prediction modes/types. The image encoding apparatus may compare the rate-distortion costs (RD cost) of the intra prediction modes/types and may determine the optimal intra prediction mode/type for the current block.

Meanwhile, the image encoding apparatus may perform a prediction sample filtering process. Prediction sample filtering may be referred to as post-filtering. Through the prediction sample filtering process, some or all of the prediction samples may be filtered. In some cases, the prediction sample filtering process may be omitted.

Referring again to FIG. 4, the image encoding apparatus may generate residual samples for the current block based on the prediction samples or the filtered prediction samples S420. The image encoding apparatus may derive the residual samples by subtracting the prediction samples from the original samples of the current block. In other words, the image encoding apparatus may derive residual sample value by subtracting the corresponding prediction sample value from the original sample value.

The image encoding apparatus may encode image information including information about the intra prediction (prediction information) and residual information about the residual samples S430. The prediction information may include intra prediction mode information and/or intra prediction method information. The image encoding apparatus may output the encoded image information in the form of a bitstream. The output bitstream may be transmitted to the image decoding apparatus through a storage medium or a network.

The residual information may include a residual coding syntax, which will be described later. The image encoding apparatus may derive quantized transform coefficients by transforming/quantizing the residual samples. The residual information may include information on the quantized transform coefficients.

Meanwhile, as described above, the image encoding apparatus may generate a reconstructed picture (including reconstructed samples and reconstructed block). The image encoding apparatus may perform dequantization/inverse transform on the quantized transform coefficients to derive (modified) residual samples. The reason for applying dequantization/inverse transform after transform/quantization of the residual samples is to derive the residual samples identical to the residual samples derived in the image decoding apparatus. The image encoding apparatus may generate a reconstructed block including reconstructed samples for the current block based on the prediction samples and the (modified) residual samples. A reconstructed picture for the current picture may be generated based on the reconstructed block. As described above, an in-loop filtering process may further be applied to the reconstructed picture.

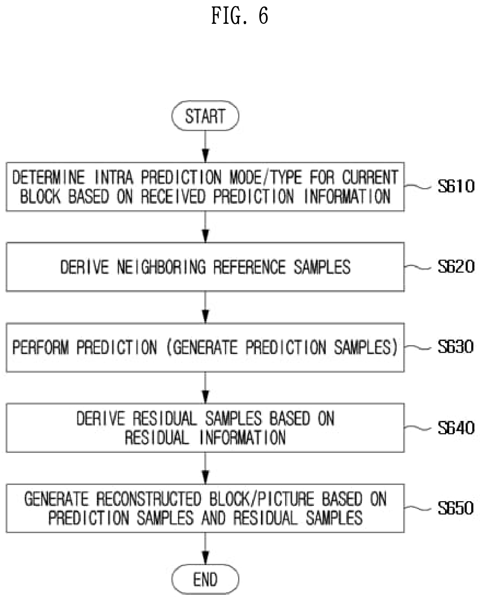

FIG. 6 is a flowchart showing an intra prediction-based video/image decoding method.

The image decoding apparatus may perform operations corresponding to the operations performed in the image encoding apparatus.

The decoding method in FIG. 6 may be performed by the image decoding apparatus in FIG. 3. Steps S610 to S630 may be performed by the intra predictor 265, and the prediction information in step S610 and the residual information in step S640 may be obtained from the bitstream by the entropy decoder 210. The residual processor of the image decoding apparatus may derive residual samples for the current block based on the residual information S640. Specifically, the dequantizer 220 of the residual processor may perform dequantization on the quantized transform coefficients derived based on the residual information to obtain transform coefficients, and the inverse transformer 230 of the residual processor may perform inverse transform on the transform coefficients to derive residual samples for the current block. Step S650 may be performed by the adder 235 or the reconstructor.

Specifically, the image decoding apparatus may derive the intra prediction mode/type for the current block based on the received prediction information (i.e., intra prediction mode/type information) S610. Additionally, the image decoding apparatus may derive neighboring reference samples of the current block S620. The image decoding apparatus may generate prediction samples within the current block based on the intra prediction mode/type and the neighboring reference samples S630. In this case, the image decoding apparatus may perform a prediction sample filtering process. Prediction sample filtering may be referred to as post-filtering. Through this prediction sample filtering process, some or all of the prediction samples may be filtered. In some cases, the prediction sample filtering process may be omitted.

The image decoding apparatus may generate residual samples for the current block based on the received residual information S640. The image decoding apparatus may generate reconstructed samples for the current block based on the prediction samples and the residual samples and derive a reconstructed block that includes the reconstructed samples S650. A reconstructed picture for the current picture may be generated based on the reconstructed block. As described above, an in-loop filtering process may further be applied to the reconstructed picture.

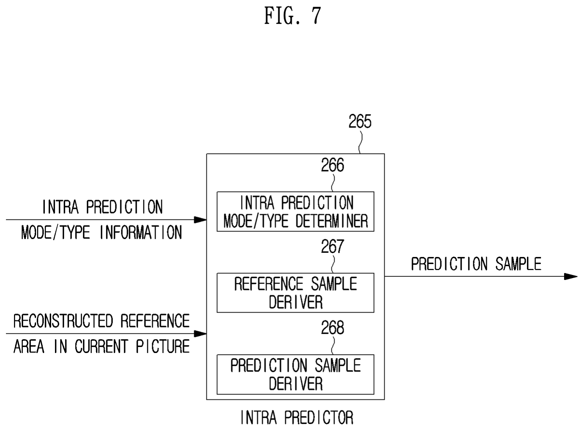

FIG. 7 shows an exemplary diagram of the configuration of an intra predictor 265 according to the present disclosure.

As shown in FIG. 7, the intra predictor 265 of the image decoding apparatus may include an intra prediction mode/type determiner 266, a reference sample deriver 267, and a prediction sample deriver 268. The intra prediction mode/type determiner 266 may determine the intra prediction mode/type for the current block based on the intra prediction mode/type information generated in the intra prediction mode/type determiner 186 of the image encoding apparatus and signaled, and the reference sample deriver 266 may derive neighboring reference samples of the current block from the reconstructed reference area in the current picture. The prediction sample deriver 268 may derive prediction samples of the current block. Meanwhile, although not illustrated, when the above-described prediction sample filtering process is performed, the intra predictor 265 may further include a prediction sample filter (not shown).

The intra prediction mode information may include, for example, flag information (i.e., intra_luma_mpm_flag) indicating whether the most probable mode (MPM) is applied to the current block or the remaining mode is applied, and when the MPM is applied to the current block, the intra prediction mode information may further include index information (i.e., intra_luma_mpm_idx) indicating one of the intra prediction mode candidates (MPM candidates). The intra prediction mode candidates (MPM candidates) may be configured as an MPM candidate list or an MPM list. Additionally, when the MPM is not applied to the current block, the intra prediction mode information may further include remaining mode information (i.e., intra_luma_mpm_remainder) indicating one of the remaining intra prediction modes excluding the intra prediction mode candidates (MPM candidates). The image decoding apparatus may determine the intra prediction mode of the current block based on the intra prediction mode information.

Additionally, the intra prediction method information may be implemented in various forms. As an example, the intra prediction method information may include intra prediction method index information indicating one of the intra prediction methods. As another example, the intra prediction method information may include at least one of reference sample line information (i.e., intra_luma_ref_idx) indicating whether the MRL is applied to the current block and, when the MRL is applied, which reference sample line is used, ISP flag information (i.e., intra_subpartitions_mode_flag) indicating whether the ISP is applied to the current block, ISP type information (i.e., intra_subpartitions_split_flag) indicating a split type of subpartitions when the ISP is applied, flag information indicating whether PDPC is applied, or flag information indicating whether LIP is applied. Additionally, the intra prediction type information may include a MIP flag indicating whether MIP is applied to the current block. In the present disclosure, the ISP flag information may be referred to as an ISP application indicator.

The intra prediction mode information and/or the intra prediction method information may be encoded/decoded through the coding method described in the present disclosure. For example, the intra prediction mode information and/or the intra prediction method information may be encoded/decoded through entropy coding (i.e., CABAC, CAVLC) based on truncated (rice) binary code.

Meanwhile, in addition to PLANAR mode, DC mode, and directional intra prediction modes, the intra prediction mode may further include a cross-component linear model (CCLM) mode for chroma sample. The CCLM mode may be classified into L_CCLM, T_CCLM, and LT_CCLM depending on whether left samples, top samples, or both are considered for deriving CCLM parameter, and it may be applied only to chroma component.

The intra prediction mode, for example, may be indexed as shown in Table 1 below.

[Table 1]

| Intra prediction mode | Associated name |
|---|---|
| 0 | INTRA_PLANAR |
| 1 | INTRA_DC |

(continued)

| Intra prediction mode | Associated name |
|---|---|
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction type (or additional intra prediction mode, etc.) may include at least one of LIP, PDPC, MRL, ISP, or MIP described above. The intra prediction type may be indicated based on intra prediction type information, and the intra prediction type information may be implemented in various forms. As an example, the intra prediction type information may include an intra prediction type index that indicates one of the intra prediction types. In another example, the intra prediction type information may include at least one of reference sample line information (i.e., intra_luma_ref_idx) indicating whether MRL is applied to the current block and, when MRL is applied, which reference sample line is used, an ISP flag information (i.e., intra_subpartitions_mode_flag) indicating whether ISP is applied to the current block; ISP type information (i.e., intra_subpartitions_split_flag) indicating the partitioning type of subpartitions when ISP is applied, a flag information indicating whether PDPC is applied, or a flag information indicating whether LIP is applied. Additionally, the intra prediction type information may include an MIP flag (which may be referred to as intra_mip_flag) indicating whether MIP is applied to the current block.

**Multi-reference Line (MRL) Intra Prediction**

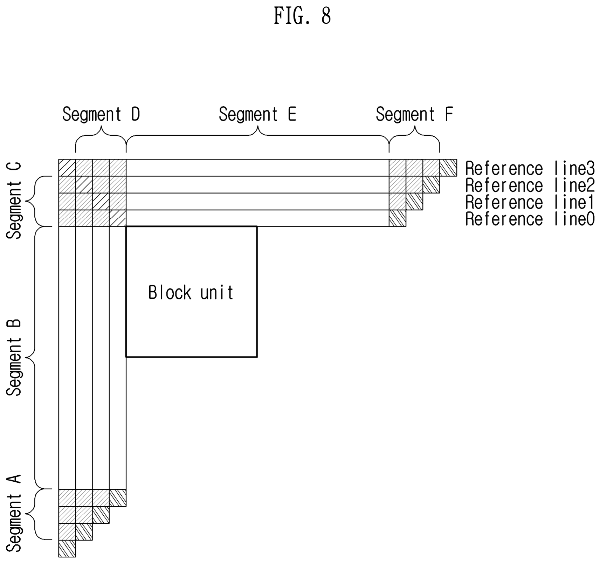

FIG. 8 is a diagram showing a multi-reference line for intra prediction according to an embodiment of the present disclosure.

The existing intra prediction used only the neighboring samples of the first line on the top of a current block and the neighboring samples of the first line on the left as reference samples for intra prediction. However, in a multiple-reference line (MRL) method, intra prediction may be performed by using neighboring samples located on a sample line that is one to three samples away from the top and/or left of a current block as reference samples. Alternatively, intra prediction using a MRL method may be performed by using neighboring samples located on a sample line that is N samples away from the top and/or left of a current block as reference samples. FIG. 8 shows an example of the multi-reference line, and a multi-reference line index (ex. mrl_idx) represents which line is used for intra prediction for a current block.

For example, the multi-reference line index may be signaled through a coding unit syntax as in Table 2. The multi-reference line index may be configured in the form of a intra_luma_ref_idx syntax element.

[Table 2]

| |
|---|
| coding_unit( x0, y0, cbWidth, cbHeight, treeType ) { |
|   if( slice_type != I ) { |
|     **cu_skip_flag**[ x0 ][ y0 ] |
|     if( cu_skip_flag[ x0 ][ y0 ] = = 0 ) |
|       **pred_mode_flag** |
|   } |
|   if( CuPredMode[ x0 ][ y0 ] = = MODE_INTRA ) { |
|     if( treeType = = SINGLE_TREE ‖ treeType = = DUAL_TREE_LUMA ) { |
|       if( ( y0 % CtbSizeY ) > 0 ) |
|         **intra_luma_ref_idx**[ x0 ][ y0 ] ... |
|       if (intra_luma_ref_idx[ x0 ][ y0 ] = = 0) |
|         **intra_luma_mpm_flag**[ x0 ][ y0 ] |
|       if( intra_luma_mpm_flag[ x0 ][ y0 ] ) |
|         **intra_luma_mpm_idx**[ x0 ][ y0 ] |
|       Else |
|         **intra_luma_mpm_remainder**[ x0 ][ y0 ] |
|     } |

(continued)

| ... |
| --- |
| } |

Intra_luma_ref_idx[ x0 ][ y0 ] may represent an intra reference line index IntraLumaRefLineIdx[ x0 ][ y0 ]. If intra_luma_ref_idx[ x0 ][ y0 ] does not exist, its value may be inferred as 0. intra_luma_ref_idx may be called an (intra) reference sample line index or mrl_idx. In addition, intra_luma_ref_idx may also be called intra_luma_ref_line_idx. The following Table 3 shows the value of IntraLumaRefLineIdx[ x0 ][ y0 ] based on intra_luma_ref_idx[ x0 ][ y0 ].

[Table 3]

| intra_luma_ref_idx[ x0 ][ y0 ] | IntraLumaRefLineIdx[ x0 ][ y0 ] |
| --- | --- |
| 0 | 0 |
| 1 | 1 |
| 2 | 3 |

A MRL may not be used for blocks on the first line (row) within a CTU. In other words, when the top boundary of a current block is the boundary of a CTU, a MRL may not be used for a current block. In Table 2, when the top boundary of a current block is the boundary of a CTU, intra_luma_ref_idx[ x0 ][ y0 ] does not exist, and its value is inferred as 0. Accordingly, the first reference line may be used for a current block. It is to prevent extended reference lines outside a current CTU line from being used. In addition, the above-described PDPC may not be used when the above-described additional reference line is used.

**General Derivation of Prediction Samples for Chroma Component**

When intra prediction is performed on a current block, prediction for the luma component block (luma block) of a current block and prediction for a chroma component block (chroma block) may be performed, and in this case, an intra prediction mode for a chroma component (a chroma block) may be configured separately from an intra prediction mode for a luma component (a luma block).

For example, an intra prediction mode for a chroma component may be indicated based on intra chroma prediction mode information, and the intra chroma prediction mode information may be signaled in the form of an intra_chroma_pred_mode syntax element. As an example, the intra chroma prediction mode information may indicate one of the candidate modes including at least one of a planar mode, a DC mode, a vertical mode, a horizontal mode, a derived mode (DM), a L_CCLM mode, a T_CCLM mode and a LT_CCLM mode. A DM may be called a direct mode. A CCLM may be called a LM.

Meanwhile, a DM and a CCLM are a dependent intra prediction mode that predicts a chroma block by using information of a luma block. The DM may represent a mode in which the same intra prediction mode as an intra prediction mode for the luma component is applied as an intra prediction mode for the chroma component. In addition, the CCLM may represent an intra prediction mode in which after subsampling the reconstructed samples of a luma block in the process of generating a prediction block for a chroma block, samples derived by applying a CCLM parameter (e.g., $\alpha$ and/or $\beta$) to subsampled samples are used as prediction samples of the chroma block.

**Overview of Cross-component Linear Model (CCLM)**

A CCLM mode may be applied to a current chroma block. A CCLM mode is an intra prediction mode using a correlation between a luma block and a chroma block corresponding to the luma block, and a linear model may be derived based on the neighboring samples of the luma block and the neighboring samples of a chroma block and may represent a mode in which the prediction samples of the chroma block are derived based on the linear model and the reconstructed samples of the luma block. Specifically, when the CCLM mode is applied to a current chroma block, parameters for the linear model may be derived based on neighboring samples used for intra prediction of the current chroma block and neighboring samples used for intra prediction of a current luma block.

In order to reduce the redundancy of cross-components, a CCLM prediction mode may be used in the present disclosure. Here, a chroma sample may be predicted based on the reconstructed luma samples of the same CU by using a linear model. For example, the linear model may be the following Equation 1.

【Equation 1】

$$pred_c(i,j) = \alpha \cdot rec'_l(i,j) + \beta$$

Here, $pred_c(i,j)$ may represent a prediction sample at the (i,j) coordinate of a current chroma block in a current CU, and $rec_L'(i,j)$ may represent a reconstructed sample at the (i,j) coordinate of a current luma block in the CU. Alternatively, $rec_L'(i,j)$ may represent the down-sampled reconstructed sample of a current luma block.

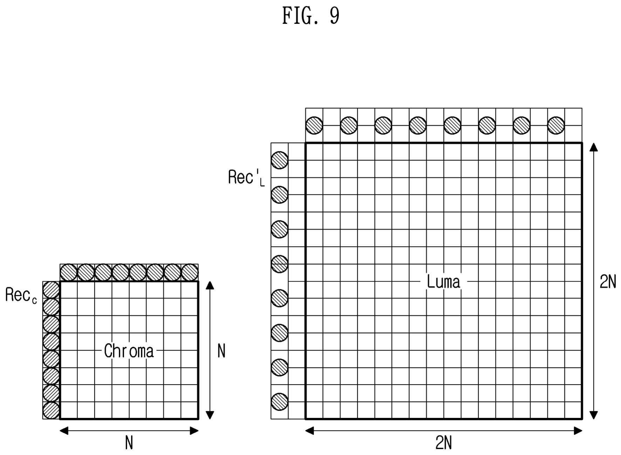

FIG. 9 is a diagram showing the position of neighbor samples used to derive a CCLM parameter according to an embodiment of the present disclosure. FIG. 9 shows an example of samples adjacent to a current block related to the position of left neighbor samples, the position of top neighbor samples and a CCLM mode.

CCLM parameters (e.g., $\alpha$ and/or $\beta$) may be derived by using up to 4 adjacent chroma samples and down-sampled luma samples corresponding thereto. Alternatively, CCLM parameters may be derived by using N neighbor chroma samples and down-sampled luma samples corresponding thereto. When the size of a current chroma block is W×H, W' and H' may be configured as follows. W' may mean a range where top neighbor chroma samples used to derive a CCLM parameter are located. H' may mean a range where left neighbor chroma samples used to derive a CCLM parameter are located.

- When a LM mode is applied, W'=W, H'=H
- When a LM_A mode is applied, W'=W+H
- When a LM_L mode is applied, H'=H+W

The position of top neighbor samples may be represented as S[0, -1]... S[W'-1, -1], and the position of left neighbor samples may be represented as S[-1, 0]... S[-1, H'-1]. In this case, four samples may be selected as follows.

- When a LM mode is applied and both top and left neighbor samples are available: S[W'/4, -1], S[3W'/4, -1], S[-1, H'/4], S[-1, 3H'/4]
- When a LM_A mode is applied or only top neighbor samples are available: S[W'/8, -1], S[3W'/8, -1], S[5W'/8, - 1], S[7W'/8, -1]
- When a LM_L mode is applied or only left neighbor samples are available: S[-1, H'/8], S[-1, 3H'/8], S[-1, 5H'/8], S[-1, 7H'/8]

Four neighboring luma samples at a position selected by the method may be obtained by downsampling. Four comparisons may be performed to find two small values ($x^0_A$ and $x^1_A$) and two large values ($x^0_B$ and $x^1_B$) among the four luma samples. A chroma sample value corresponding to the four neighboring samples may be represented as $y^0_A$, $y^1_A$, $y^0_B$ and $y^1_B$. In this case, $X_a$, $X_b$, $Y_a$ and $Y_b$ may be derived through the following Equation 2.

【Equation 2】

$$X_a = (x^0_A + x^1_A + 1) >> 1; \; X_b = (x^0_B + x^1_B + 1) >> 1; \; Y_a = (y^0_A + y^1_A + 1) >> 1; \; Y_b = (y^0_B + y^1_B + 1) >> 1$$

The CCLM parameters $\alpha$ and $\beta$ may be obtained through the following Equation 3.

【Equation 3】

$$\alpha = \frac{Y_a - Y_b}{X_a - X_b}$$

$$\beta = Y_b - \alpha \cdot X_b$$

An embodiment of the present disclosure may derive a CCLM parameter by using top neighbor samples and left neighbor samples, and may also be used in other two LM modes (a LM_A mode and a LM_L mode). According to an embodiment of the present disclosure, in a LM_A mode, only top neighbor samples may be used to derive a CCLM parameter. In this case, in order to obtain more samples, top neighbor samples may be extended to samples at a W+H position. On the other hand, in a LM_L mode, only left neighbor samples may be used to derive a CCLM parameter. In this case, in order to obtain more samples, left neighbor samples may be extended to samples at a H+W position. As another example, in a non-square block, top neighbor samples may be extended to a W+W position, and left neighbor samples may be extended to a H+H position.

In order to match the position of a chroma sample for a 4:2:0 video sequence, two types of downsampling filters may be applied to a luma sample to achieve a downsampling ratio of 2:1 in both horizontal and vertical directions. The downsampling filter may be designated by a SPS level flag. The downsampling filter may be applied to obtain a luma sample corresponding to a chroma sample at a predetermined position (i, j). Two downsampling filters may be the following Equations 4 and 5.

【Equation 4】

$$\mathrm{rec_L}'(i,j) = \begin{bmatrix} \mathrm{rec_L}(2i-1,2j-1) + 2 \cdot \mathrm{rec_L}(2i-1,2j-1) + \mathrm{rec_L}(2i+1,2j-1) + \\ \mathrm{rec_L}(2i-1,2j) + 2 \cdot \mathrm{rec_L}(2i,2j) + \mathrm{rec_L}(2i+1,2j) + 4 \end{bmatrix} \gg 3$$

【Equation 5】

$$\mathrm{rec_L}'(i,j) = \begin{bmatrix} \mathrm{rec_L}(2i,2j-1) + \mathrm{rec_L}(2i-1,2j) + 4 \cdot \mathrm{rec_L}(2i,2j) \\ +\mathrm{rec_L}(2i+1,2j) + \mathrm{rec_L}(2i,2j+1) + 4 \end{bmatrix} \gg 3$$

When the boundary of a current luma block matches the boundary of a CTU, only one luma reference line may be used to generate downsampled luma samples.

Deriving the parameter may be performed in a part of the image decoding process, and may not be performed only by an encoder search operation. As a result, a syntax may not be used to deliver $\alpha$ and/or $\beta$ values to an image decoding apparatus.

According to the present disclosure, a total of eight intra prediction modes may be used in an intra chroma prediction mode encoding process. The eight intra prediction modes may include the existing five intra prediction modes and three CCLM modes (CCLM, LM_A and LM_L). The process of signaling and deriving an intra chroma prediction mode is described below by referring to the following Tables 4 and 5.

[Table 4]

| intra_chroma_pred_mode[ xCb ][ yCb ] | lumaIntraPredMode | | | | |
|---|---|---|---|---|---|
| | 0 | 50 | 18 | 1 | X ( 0 <= X <= 66 ) |
| 0 | 66 | 0 | 0 | 0 | 0 |
| 1 | 50 | 66 | 50 | 50 | 50 |
| 2 | 18 | 18 | 66 | 18 | 18 |
| 3 | 1 | 1 | 1 | 66 | 1 |
| 4 | 0 | 50 | 18 | 1 | X |

[Table 5]

| intra_chroma_pred_mode[ xCb ][ yCb ] | lumaIntraPredMode | | | | |
|---|---|---|---|---|---|
| | 0 | 50 | 18 | 1 | X ( 0 <= X <= 66 ) |
| 0 | 66 | 0 | 0 | 0 | 0 |
| 1 | 50 | 66 | 50 | 50 | 50 |
| 2 | 18 | 18 | 66 | 18 | 18 |
| 3 | 1 | 1 | 1 | 66 | 1 |
| 4 | 81 | 81 | 81 | 81 | 81 |
| 5 | 82 | 82 | 82 | 82 | 82 |
| 6 | 83 | 83 | 83 | 83 | 83 |
| 7 | 0 | 50 | 18 | 1 | X |

Intra chroma prediction mode encoding may be dependent on the intra prediction mode of a luma block corresponding thereto. Since a separate block partition structure for luma and chroma components are enabled in an I slice, one chroma block may correspond to a plurality of luma blocks. Accordingly, for a chroma DM mode, the intra prediction mode of a corresponding luma block covering the center position of a current chroma block may be directly applied.

Table 4 shows a matching table for deriving an intra chroma prediction mode when a CCLM is not applicable, and Table 5 shows a mapping table for deriving an intra chroma prediction mode when a CCLM is applicable. As shown in a table, an intra chroma prediction mode may be determined based on the value of signaled intra chroma prediction mode (intra_chroma_pred_mode) information and an intra luma prediction mode for a luma block covering the center bottom-right sample of a current block or a chroma block (ex. when DUAL_TREE is applied). The indexes of IntraPredModeC [xCb][yCb] derived from the above-described tables may correspond to the indexes of an intra prediction mode disclosed in the above-described Table 1.

### Overview of Multi-model LM (MMLM)

A CCLM mode may be extended to a MMLM mode. For example, three MMLM modes may be added. Neighbor samples reconstructed in each MMLM mode may be classified into two groups by using a threshold value. The threshold value may be, for example, the average value of reconstructed luma samples. The linear model of each group may be derived by using a Linear-Mean-Square (LMS) method. Even for a CCLM mode, a LMS method may be used to derive a linear model.

When a MMLM is used, there may be at least two linear models between luma samples and chroma samples in a CU. In this method, the neighbor luma samples and neighbor chroma samples of a current block may be classified into multiple groups. In addition, each group may be used as a training set for deriving a linear model. In other words, a CCLM parameter (e.g., $\alpha$ and/or $\beta$) may be derived for each group. In addition, samples in a current luma block may be classified by the same method as a method for classifying neighbor luma samples.

In this method, neighbor samples may be classified into M groups. Here, M may be 2 or 3. When M is 2 or 3, a MMLM method may be designed in two additional chroma prediction modes, MMLM2 and MMLM3, other than the original LM mode. An image encoding apparatus may select an optimal mode in a RDO process and signal that mode.

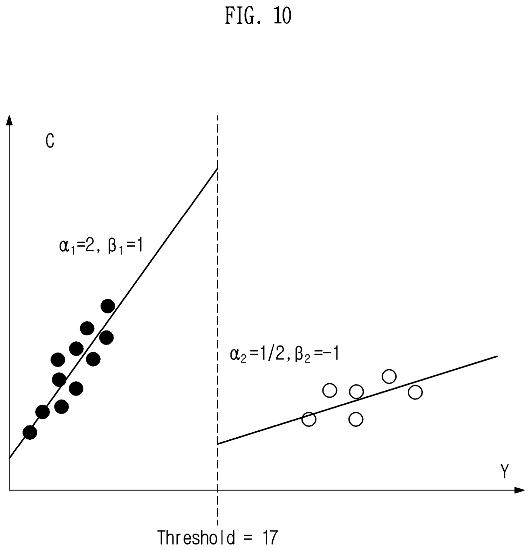

FIG. 10 is a diagram showing a method for classifying neighbor samples according to an embodiment of the present disclosure into two groups. FIG. 10 shows a case where M is 2. Referring to FIG. 10, a threshold value may be calculated as the average value of reconstructed neighbor luma samples. A neighbor luma sample with $Rec'_L[x,y]$ less than or equal to a threshold value may be classified into group 1, and a neighbor luma sample with $Rec'_L[x,y]$ exceeding a threshold value may be classified into group 2. The two models of group 1 and group 2 above may be derived by using the following Equation 6.

【Equation 5】

$$\begin{cases} Pred_C[x,y] = \alpha_1 \times Rec'_L[x,y] + \beta_1 & if \ Rec'_L[x,y] \leq Threshold \\ Pred_C[x,y] = \alpha_2 \times Rec'_L[x,y] + \beta_2 & if \ Rec'_L[x,y] > Threshold \end{cases}$$

### Overview of Convolutional Cross-Component Model (CCCM)

The chroma samples may be predicted from reconstructed luma samples by applying a concept similar to that performed by the above-described CCLM mode(s). For example, when a CCCM prediction mode is performed, reconstructed luma samples may be used to predict chroma samples. When chroma subsampling is used, reconstructed luma samples may be downsampled to match a low-resolution chroma grid (block). In addition, a CCCM mode may include a single model or a multi model. Here, a multi model may be a model that uses two models. One of the two models included in a multi model may be applied to a sample having a value greater than or equal to the average value of luma reference samples. Another one of the two models included in a multi-model may be applied to samples below the average value of luma reference samples. Here, luma reference samples may mean samples included in a luma reference area adjacent to a corresponding luma block. A multi-model CCCM mode may be applied to a PU having at least 128 available reference samples. However, the present disclosure is not limited thereto, and a multi-model CCCM mode may also be applied to a PU having less than 128 available reference samples. The number of available reference samples that serve as a reference for a PU to which the CCCM mode may be applied is not limited to the 128, and may be, for example, 256 or 64, etc. Alternatively, the number of the available reference samples may be determined differently according to the size of a PU.

## Convolutional filter

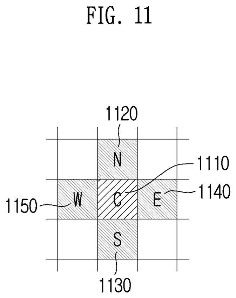

A 7-tap filter proposed in a CCCM prediction mode may be composed of a 5-tap filter, a nonlinear term and a bias term. Here, a 5-tap filter may be a plus sign shaped spatial filter that uses neighbor luma samples existing at a plus-shaped position based on a corresponding luma sample in a corresponding luma block. A component configuring a 5-tap filter will be specifically described by referring to FIG. 11 below.

FIG. 11 is a diagram showing corresponding luma samples and neighbor luma samples. A component configuring a 5-tap filter may be composed of a corresponding luma sample (C) 1110 corresponding to a prediction target chroma sample, the top/northern (N) neighbor luma sample 1120 of a corresponding luma sample, a bottom/-southern (S) neighbor luma sample 1130, a right/eastern (E) neighbor luma sample 1140 and a left/western (W) neighbor luma sample 1150.

Nonlinear term P, which is one of the components configuring a 7-tap filter, may be represented as 2 powers of corresponding luma sample value C, and may be scaled to the sample value range of the content. Equation 1 below may be an example in which nonlinear term P is derived. In addition, Equation 2 may be an example in which nonlinear term P is derived in the case of the 10-bit content.

$$【Equation\ 7】$$

$$P = (\ C*C + midVal\ ) >> bitDepth$$

$$【Equation\ 8】$$

$$P = (\ C*C + 512\ ) >> 10$$

Bias term B, which is one of the components configuring a 7-tap filter, may be represented as a scalar offset between an input and an output. It may be similar to the offset term of a CCLM. In addition, bias term B may be configured as the intermediate value of a chroma sample. For example, for the 10-bit content, bias term B may be 512.

The output of a 7-tap filter may be calculated by a convolution between filter coefficient Ci and an input value, and may be clipped to the range of valid chroma samples. Equation 3 below may be an example in which the prediction sample value of a chroma sample is derived by using a CCCM prediction mode.

$$【Equation\ 9】$$

$$predChromaVal = c_0C + c_1N + c_2S + c_3E + c_4W + c_5P + c_6B$$

## Calculation of CCCM Filter Coefficients

Filter coefficient Ci may be calculated by minimizing a Mean Square Error (MSE) between predicted chroma samples and reconstructed chroma samples in a reference area. Here, a MSE may be a function representing a difference value between predicted chroma samples and reconstructed chroma samples in a reference area. 'filter coefficient' in the present disclosure may be referred to as a term such as 'CCCM coefficient', 'CCCM filter coefficient', etc. Hereinafter, a method for calculating a filter coefficient will be specifically described by referring to FIG. 10.

FIG. 10 is a diagram showing the reference sample area of a chroma block for calculating a filter coefficient. FIG. 10 shows a reference area consisting of chroma samples of six lines adjacent to the top of a current PU and chroma samples of six lines adjacent to the left. A reference area may be extended to the top-right area of a PU boundary by the width of a PU. In addition, a reference area may be extended to the bottom-left area of a PU boundary by the height of a PU. A reference area according to the present disclosure may be adjusted to include only available samples. As shown in FIG. 10, a reference area may be extended to have reference samples 1010. The extension of the reference area may be necessary to support the side samples of the above-described plus sign shaped spatial filter. In addition, extended reference samples 1010 existing in an unavailable area may be padded.

MSE minimization for filter coefficient Ci may be performed by obtaining an autocorrelation matrix for a luma input and calculating a cross-correlation vector between a luma input and a chroma output. An autocorrelation matrix may be decomposed by using LDL decomposition, and a final filter coefficient may be calculated by using back-substitution. This process may be the same as the calculation process of an Adaptive Loop Filter (ALF) filter coefficient, but LDL decomposition may be selected instead of Cholesky decomposition to avoid the use of a square root operation. An approach method proposed above may use only integer arithmetic.

**Bitstream Signaling**

The use of a CCCM prediction mode may be signaled by a context-adaptive binary arithmetic coding (CABAC) encoded PU level flag. In order to support this, a new CABAC context may be included. When a CCCM flag is signaled, a CCCM prediction mode may be considered as the sub-mode of a CCLM prediction mode. In other words, a CCCM flag may be signaled only when an intra prediction mode is LM_CHROMA_IDX (enabling of a single-mode CCCM) or MMLM_CHROMA_IDX (enabling of a multi-mode CCCM).

**Overview of Gradient Linear Model (GLM)**

Compared to a CCLM prediction mode, a GLM prediction mode uses the gradients of a luma sample to derive a linear model instead of downsampling the value of a corresponding luma sample. Specifically, when a GLM prediction mode is applied, downsampled luma sample L used as the input of a CCLM prediction process is replaced with luma sample gradient G. Other processes performed in a CCLM prediction mode (e.g., parameter derivation, linear transform of a prediction sample, etc.) are equally applied to a GLM prediction mode. The following Equation 10 may be an equation used to generate a prediction sample in a GLM prediction mode.

【Equation 10】

$$C = \alpha \cdot G + \beta$$

For signaling, when a CCLM prediction mode is available for a current CU, two flags for Cb and Cr components may be signaled, respectively. Here, two flags for Cb and Cr components may represent whether a GLM prediction mode is available for each component. If a GLM prediction mode is available for one component, one syntax element for selecting one of the 16 gradient filters for gradient calculation may be further signaled. A GLM prediction mode may be combined with the existing CCLM prediction mode by signaling one additional flag from (or to) a bitstream. When this combination is applied, a filter coefficient used to derive the input luma sample of a linear model may be calculated by combining a gradient filter selected in a GLM prediction mode and the downsampled filter of a CCLM prediction mode.

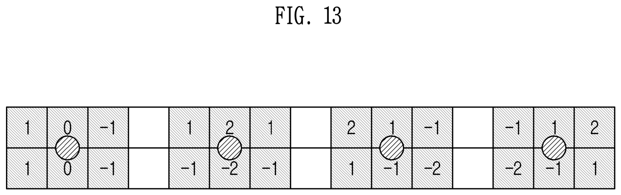

In the ECM adoption version of a GLM, only 4 of the 16 gradient filters may be available in a GLM prediction mode as shown in FIG. 13. Meanwhile, the combination of the downsampled filter of the existing CCLM prediction mode and a gradient filter may not be available.

In ECM, as in the following Equation 11, a GLM mode is proposed that predicts a chroma sample by using a different parameter from the existing one based on the gradient G(i,j) of a luma sample and the reconstructed value rec'L(i,j) of a downsampled luma sample.

【Equation 11】

$$pred_C(i,j) = \alpha_0 \cdot G(i,j) + \alpha_1 \cdot rec_L'(i,j) + \alpha_2 \cdot midValue$$

The model parameters $\alpha_0$, $\alpha_1$ and $\alpha_2$ may be derived from adjacent samples consisting of six rows and columns based on a LDL decomposition method, which is a CCCM mode. In other words, model parameters $\alpha_0$, $\alpha_1$ and $\alpha_2$ may be derived from six left neighbor sample lines and six top neighbor sample lines based on a LDL decomposition method.

For signaling, one flag representing whether a GLM prediction mode is available for both a Cb component and a CR component may be signaled. In addition, a syntax element representing a gradient pattern may be encoded/decoded in the form of a truncated unary code.

Hereinafter, an image encoding/decoding method according to an embodiment of the present disclosure will be described in detail.

The present disclosure relates to intra prediction. Specifically, the present disclosure proposes a method for optimizing encoding and/or decoding efficiency by using a CCLM prediction mode that performs prediction based on a luma block, a MMLM prediction mode that performs prediction by dividing reconstructed neighbor samples into two categories, a CCCM prediction mode that performs prediction based on a convolutional filter and/or a GLM prediction mode that performs prediction based on the gradient of a luma sample. Here, CCLM, MMLM, CCCM and GLM prediction modes are a cross-component prediction method using a correlation between luma and chroma pixels, and the prediction modes may utilize a parameter calculated by using the neighboring reference samples of a current chroma block and the neighboring reference samples of a corresponding luma block for encoding and decoding. In this case, for parameter calculation, only the above reference samples of a current block may be used, only the left reference samples of a current block may be used, or both the above reference samples and the left reference samples of a current block may be used.

A CCLM prediction mode may include a CCLM mode using left reference samples and above reference samples, a CCLM_L mode using only left reference samples and a CCLM_A mode using only above reference samples. A MMLM prediction mode may include a MMLM mode using left reference samples and above reference samples, a MMLM_L mode using only left reference samples and a MMLM_A mode using only above reference samples. A CCCM prediction mode may include a CCCM mode using left reference samples and above reference samples, a CCCM_L mode using only left reference samples and a CCCM_A mode using only above reference samples. A GLM prediction mode may include a GLM mode using left reference samples and above reference samples, a GLM_L mode using only left reference samples and a GLM_A mode using only above reference samples.

The present disclosure proposes a method for improving prediction accuracy by the combination of a prediction block predicted by using only left reference samples and a prediction block predicted by using only above reference samples in CCLM, MMLM, CCCM and GLM prediction modes. In addition, the present disclosure proposes a method for combining CCLM, MMLM, CCCM and GLM prediction modes by using the same reference samples.

**Embodiment 1**

The present disclosure proposes a method for improving prediction accuracy by the combination of a prediction block predicted by using only above reference samples neighboring a current chroma block and a prediction block predicted by using only left reference samples neighboring a current chroma block in CCLM, MMLM, CCCM and GLM prediction modes. In addition, the present disclosure proposes a method for generating a more sophisticated intra prediction block through the combination of a prediction block generated after performing cross-component prediction by using only above reference samples neighboring a current chroma block and a prediction block generated after performing cross-component prediction by using only left reference samples neighboring a current chroma block.

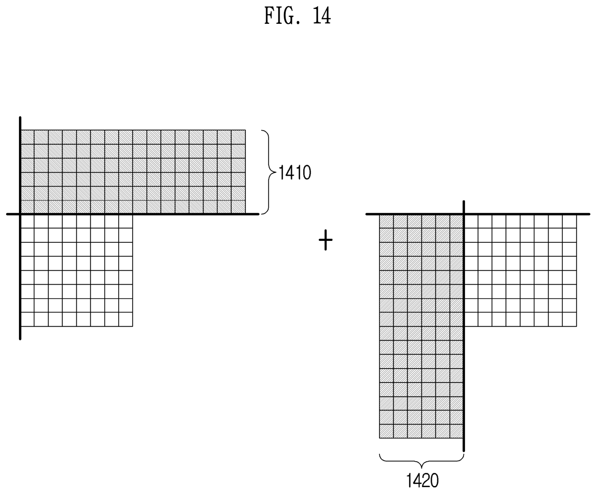

FIG. 14 shows reference samples used for performing cross-component prediction according to an embodiment of the present disclosure. Referring to FIG. 14, the present disclosure may generate a new prediction block (a final prediction block) by combining a prediction block generated after performing cross-component prediction by using only above reference samples 1410 and a prediction block generated after performing cross-component prediction by using only left reference samples 1420 in a 8x8 chroma block. In this case, above reference samples 1410 may be samples included in above reference sample lines adjacent to a current chroma block. In addition, left reference samples 1420 may be samples included in left reference sample lines adjacent to a current chroma block.

Above reference sample lines and left reference sample lines may be composed of up to 6 lines of reference sample lines, respectively. The number of reference sample lines and reference samples used for improved cross-component prediction in the present disclosure may be the same as the number of reference sample lines and reference sample lines used in the existing CCLM, MMLM, CCCM and GLM prediction modes. Alternatively, the present disclosure may calculate a prediction parameter by using 1 line, 2 lines or N lines of reference sample lines in the same manner as all cross-component prediction methods. In this case, N may be a natural number having a value between 1 and a CTU size.

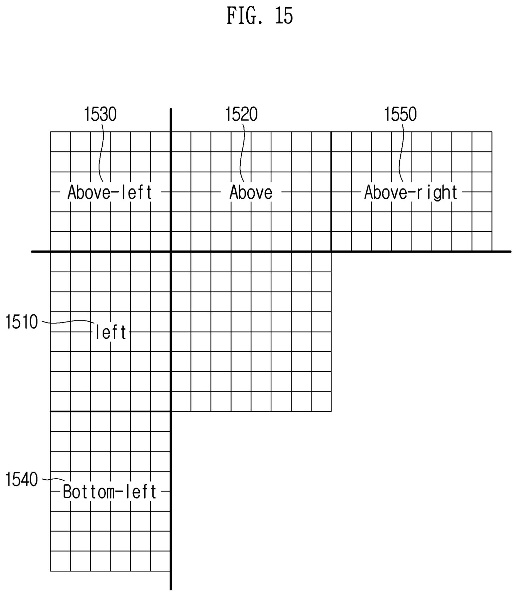

FIG. 15 shows a reference area used for performing cross-component prediction according to an embodiment of the present disclosure. According to an embodiment of the present disclosure, in order to perform cross-component prediction by using above reference samples, at least one of an above-left reference area 1530, an above reference area 1520 or an above-right reference area 1550 may be used. In other words, the present disclosure may calculate an above cross-component parameter by using at least one of an above-left reference area 1530, an above reference area 1520 or an above-right reference area 1550.

According to an embodiment of the present disclosure, in order to perform cross-component prediction by using left reference samples, at least one of an above-left reference area 1530, a left reference area 1510 or a bottom-right reference area 1540 may be used. In other words, the present disclosure may calculate a left cross-component parameter by using at least one of an above-left reference area 1530, a left reference area 1510 or a bottom-left reference area 1540.

A mode for performing cross-component prediction by using above reference samples 1410 may include a LM_A, MMLM_A, GLM_A or CCCM_A mode. In other words, a LM_A, MMLM_A, CCCM_A or GLM_A mode may predict a current chroma block by using above reference samples 1410. Meanwhile, a mode for performing cross-component prediction by using left reference samples 1420 may include a LM_L, MMLM_L, CCCM_L or GLM_L mode. In other words, a LM_L, MMLM_L, CCCM_L or GLM_L mode may predict a current chroma block by using left reference samples 1420. The present disclosure may generate a final prediction block with improved accuracy by appropriately combining a prediction block (i.e., the first chroma prediction block) generated by using above reference samples 1410 and a prediction block (i.e., the second chroma prediction block) generated by using left reference samples 1420. For example, the present disclosure may generate a final prediction block by weighted summing the first chroma prediction block and the second chroma prediction block. A final prediction block may be generated by applying two prediction blocks (the first chroma prediction block and the second chroma prediction block) generated by the method to the following Equation 12.

【Equation 12】

$$pred = w0 * pred\_above + w1 * pred\_left$$

In Equation 12, pred means a final prediction block, and pred_above means a prediction block (i.e., the first chroma prediction block) generated by a cross-component prediction method by using above reference samples 1410. pred_left means a prediction block (i.e., the second chroma prediction block) generated by a cross-component prediction method by using left reference samples 1420. w0 represents a weight applied to pred_above, and w1 represents a weight applied to pred_left. When pred-above and pred_left are weighted summed, a final prediction sample at a corresponding position may be generated by applying w0 and w1 to samples at the same position existing in pred-above and pred_left, respectively.

In Equation 12, a cross-component prediction method that may generate pred_above (i.e., the first chroma prediction block) may include LM_A, MMLM_A, CCCM_A and GLM_A modes. In Equation 12, a cross-component prediction method that may generate pred_left (i.e., the second chroma prediction block) may include LM_L, MMLM_L, CCCM_L and GLM_L modes.

According to an embodiment of the present disclosure, pred_above and pred_left may be generated by using the same cross-component prediction method. In other words, when pred_above is a prediction block generated in a CCCM_A mode, pred_left may be a prediction block generated in a CCCM_L mode.

According to another embodiment of the present disclosure, pred_above and pred_left may be generated by using a different cross-component prediction method. For example, when the prediction mode of pred_above is CCLM_A, the prediction mode of pred_left may be MMLM_L. Accordingly, according to the present disclosure, a final prediction block may be generated by combining a total of 16 methods.

According to the present disclosure, weights w0 and w1 may be determined in various ways. For example, weights w0 and w1 may be a value fixed as 1/2, respectively. In other words, pred_above and pred_left may always be combined equally at a ratio of 1:1. As another example, weights w0 and w1 may be determined as in the following Equation 13.

【Equation 13】

$$w0 = \alpha$$

$$w1 = 1 - \alpha$$

In other words, w0 may be a fixed value $\alpha$, and w1 may be a fixed value 1-$\alpha$. Here, $\alpha$ may be a rational number between 0 and 1. As another example, weights w0 and w1 may be adaptively determined based on the size of a current chroma block as in the following Equation 14.

【Equation 14】

$$w0 = \frac{width}{width + height}$$

$$w1 = 1 - w0$$

In Equation 14, width means the width of a current chroma block, and height means the height of a current chroma block. As an example, for a 16X4 chroma block, w0 may be 16/20=0.8, and w1 may be 0.2. As another example, w0 and w1 may be adaptively determined based on the number of reference samples used for prediction as in the following Equation 15.

【Equation 15】

$$w0 = \frac{N_{above}}{N_{above} + N_{left}}$$

$$w1 = 1 - w0$$

In Equation 15, $N_{above}$ means the number of above reference samples used for prediction, and $N_{left}$ means the number of left reference samples used for prediction. As another example, w0 and w1 may be adaptively determined based on the error value size of an actual neighboring reference sample and the prediction sample value of a neighboring reference sample as in the following Equation 16.

As another example, weights w0 and w1 may be variably determined as in the following Equation 16.

【Equation 16】

$$w0 = \frac{E_{left}}{E_{above} + E_{left}}$$

$$w1 = 1 - w0$$

In Equation 16, $E_{above}$ may be an error value between the actual value and the prediction value of a reference sample adjacent to a current chroma block. Here, the prediction value of a neighboring reference sample adjacent to a current chroma block may be a value predicted by using cross-component parameters obtained based on an above reference sample adjacent to a current block. In other words, an image encoding apparatus 100 and/or an image decoding apparatus 200 may predict the value of a neighboring chroma reference sample through a corresponding luma sample value after obtaining a parameter for predicting a current chroma block by using a CCLM_A, MMLM_A, CCCM_A or GLM_A mode. $E_{above}$ may be calculated through an error between the value of a neighboring chroma reference sample predicted in this way and the value of an actual neighboring chroma reference sample.

When a neighboring chroma reference sample is used to calculate $E_{above}$, at least one of an above reference area 1520, an above-left reference area 1530, an above-right reference area 1550, a left reference area 1510 or a bottom-left reference area 1540 may be used. In order to calculate $E_{above}$, only some of the reference samples of the five areas 1510, 1520, 1530, 1540 and 1550 may be used or the five areas may be combined and used.

The number of reference sample lines used to calculate $E_{above}$ may use the number of reference sample lines of the existing method or may use more reference sample lines. As an example, only a left reference sample may be used or only an above reference sample may be used to calculate $E_{above}$. Alternatively, both a left reference sample and an above reference sample may be used to calculate $E_{above}$. Alternatively, all of an above reference sample, an above-right reference sample and an above-left reference sample may be used to calculate $E_{above}$. Alternatively, an above reference sample, an above-left reference sample, an above-right reference sample, a left reference sample and a bottom-left reference sample may be used to calculate $E_{above}$, and the present disclosure is not limited thereto.

In Equation 16, $E_{left}$ may be an error value between the actual value and the prediction value of a neighboring reference sample adjacent to a current chroma block. Here, the prediction value of a neighboring reference sample adjacent to a current chroma block may be a value predicted by using cross-component parameters obtained based on a left reference sample adjacent to a current block. In other words, an image encoding apparatus 100 and/or an image decoding apparatus 200 may predict the value of a neighboring chroma reference sample based on a corresponding luma sample value after obtaining a parameter for predicting a current chroma block by using a CCLM_L, MMLM_L, CCCM_L or GLM_L mode. $E_{left}$ may be calculated through an error between the value of a neighboring chroma reference sample predicted in this way and the value of an actual neighboring chroma reference sample.

When a neighboring chroma reference sample is used to calculate $E_{left}$, at least one of an above reference area 1520, an above-left reference area 1530, an above-right reference area 1550, a left reference area 1510 or a bottom-left reference area 1540 may be used. In order to calculate Eleft, only some of the reference samples of the five areas 1510, 1520, 1530, 1540 and 1550 may be used or the five areas may be combined and used.

The number of reference sample lines used to calculate $E_{left}$ may use the number of reference sample lines of the existing method or may use more reference sample lines. As an example, only a left reference sample may be used or only an above reference sample may be used to calculate $E_{left}$. Alternatively, both a left reference sample and an above reference sample may be used to calculate $E_{left}$. Alternatively, all of an above reference sample, an above-right reference sample and an above-left reference sample may be used to calculate $E_{left}$. Alternatively, an above reference sample, an above-left reference sample, an above-right reference sample, a left reference sample and a bottom-left reference sample may be used to calculate $E_{left}$, and the present disclosure is not limited thereto.

When calculating $E_{above}$ and $E_{left}$ in Equation 16, a mean-square error (MSE), the Sum of Absolute Transformed Differences (SATD) or the Sum of Absolute Differences (SAD) may be used. When the number of reference samples used to calculate $E_{above}$ and $E_{left}$ is different, an error value may be adjusted through normalization.

According to an embodiment of the present disclosure, a prediction block generated after performing cross-component prediction by using only an above reference sample and a prediction block generated after performing cross-component prediction by using only a left reference sample may be combined by a method in the following Equation 17.

【Equation 17】

$$pred(x,y) = w0(x,y) \cdot pred_{above(x,y)} + w1(x,y) \cdot pred\_left(x,y)$$

In Equation 17, (x, y) means a coordinate within a chroma block for prediction. In other words, different weights w0 and w1 may be adaptively applied to the position of a sample within a chroma block. For example, as in the following Equation 18, w0 and w1 may be adaptively calculated according to a sample position.

【Equation 18】

$$w0(x,y) = (y+1)/(x+y+2), \quad w1(x,y) = 1 - w0(x,y)$$

$$w0(x,y) = \frac{1}{2} + \frac{x}{2 \cdot width} - \frac{y}{2 \cdot height} , \quad w1(x,y) = 1 - w0(x,y)$$

$$w0(x,y) = \begin{cases} \frac{1}{2} + \frac{x}{2 \cdot width} - \frac{y}{height} , & if\ \mathrm{E}_{above} > K \cdot \mathrm{E}_{left} \\[2mm] \frac{1}{2} + \frac{x}{width} - \frac{y}{2 \cdot height} , & if\ \mathrm{E}_{left} > K \cdot \mathrm{E}_{above} \\[2mm] \frac{1}{2} + \frac{x}{2 \cdot width} - \frac{y}{2 \cdot height} , & otherwise \end{cases}$$

In Equation 18, width and height mean the width and height of a current chroma block. $E_{above}$ may be a value obtained by calculating an error value size with an actual sample value after predicting a neighboring reference sample value adjacent to a current chroma block by using cross-component parameters obtained by using an above reference sample as described above. $E_{left}$ may be a value obtained by calculating an error value size with an actual sample value after predicting a neighboring reference sample value adjacent to a current chroma block by using cross-component parameters obtained by using a left reference sample as described above.

A weight in three equations proposed in Equation 18 may be selected in inverse proportion to a distance from each sample position to a left reference sample and/or an above reference sample. Accordingly, the present disclosure may generate a prediction block more precisely and improve encoding efficiency.

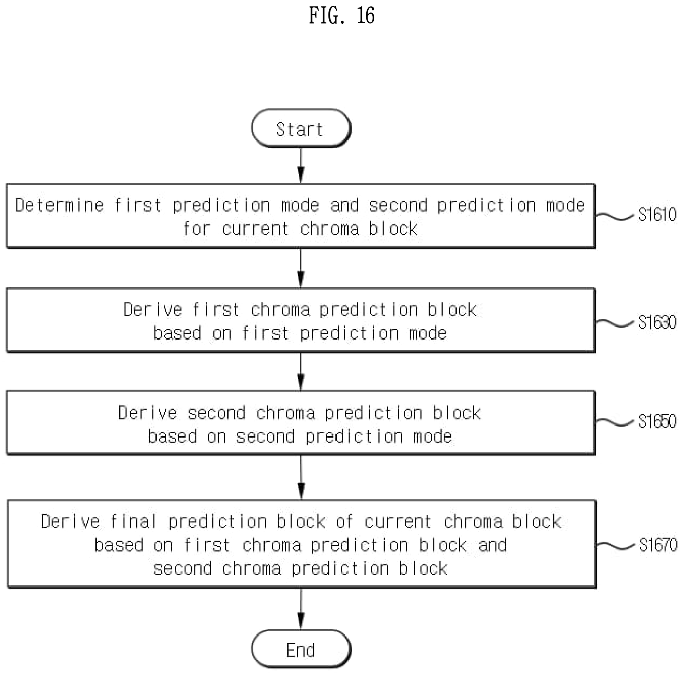

FIG. 16 is a flowchart of an image encoding/decoding method according to an embodiment of the present disclosure. An image encoding apparatus 100 and/or an image decoding apparatus 200 may determine the first prediction mode and the second prediction mode for a current chroma block S1610. In this case, the first prediction mode and the second prediction mode may be a prediction mode for predicting a current chroma block based on a luma block corresponding to a current chroma block.

The first prediction mode and the second prediction mode used in the present disclosure may be one of a CCLM mode that performs prediction based on a luma block, a MMLM mode that performs prediction by dividing reconstructed neighbor samples into two categories, a CCCM mode that performs prediction based on a convolutional filter or a GLM mode that performs prediction based on the gradient of a luma sample.

Specifically, the first prediction mode may be one of CCLM_A, MMLM_A, CCCM_A, or GLM_A. The second prediction mode may be one of CCLM_L, MMLM_L, CCCM_L or GLM_L. An image encoding apparatus 100 and/or an image decoding apparatus 200 may derive the first chroma prediction block based on the first prediction mode S1630. Here, the first chroma prediction block may be derived based on at least two of an above reference area, a left reference area or an above-left reference area neighboring a current chroma block. Alternatively, the first chroma prediction block and the second chroma prediction block may be derived based on at least one of an above-right reference area or a bottom-left reference area neighboring a current chroma block.

According to an embodiment of the present disclosure, a left reference area, an above reference area and an above-left reference area may include N reference sample lines. Here, N may have a value less than or equal to the size of a current chroma block. In other words, N may be a natural number greater than or equal to 1 and less than or equal to a CTU size.

An image encoding apparatus 100 and/or an image decoding apparatus 200 may derive the second chroma prediction block based on the second prediction mode S1650. Here, the second chroma prediction block may be derived based on at least two of an above reference area, a left reference area or an above-left reference area neighboring the current chroma block. An image encoding apparatus 100 and/or an image decoding apparatus 200 may derive the final prediction block of a current chroma block based on the first chroma prediction block and the second chroma prediction block S1670.

According to the present disclosure, an image encoding apparatus 100 and/or an image decoding apparatus 200 may determine the first weight (i.e., w0) applied to the first chroma prediction block. In addition, an image encoding apparatus 100 and/or an image decoding apparatus 200 may determine the second weight (i.e., w1) applied to the second chroma prediction block. An image encoding apparatus 100 and/or an image decoding apparatus 200 may derive a final prediction block by weighted summing the first chroma prediction block and the second chroma prediction block based on the first weight and the second weight. In this case, the first weight and the second weight may be determined based on at least one of a pre-determined value, the size of a current chroma block or a template matching cost.

According to an embodiment of the present disclosure, the first weight and the second weight may be determined based on the position of a current chroma sample included in a current chroma block. In other words, a weight may be adaptively determined for each current chroma sample included in a current chroma block. According to embodiments of the present disclosure, the first weight and the second weight may be determined based on one of the Equations 13 to 16 or Equation 18, and the present disclosure is not limited thereto and may determine the first weight and the second weight in various ways.

The first prediction mode and the second prediction mode used in the present disclosure may be one of a CCLM mode that performs prediction based on a luma block, a MMLM mode that performs prediction by dividing reconstructed neighbor samples into two categories, a CCCM mode that performs prediction based on a convolutional filter or a GLM mode that performs prediction based on the gradient of a luma sample.

According to an embodiment of the present disclosure, a left reference area, an above reference area and an above-left reference area may include N reference sample lines. Here, N may have a value less than or equal to the size of a current chroma block. In other words, N may be a natural number greater than or equal to 1 and less than or equal to a CTU size.

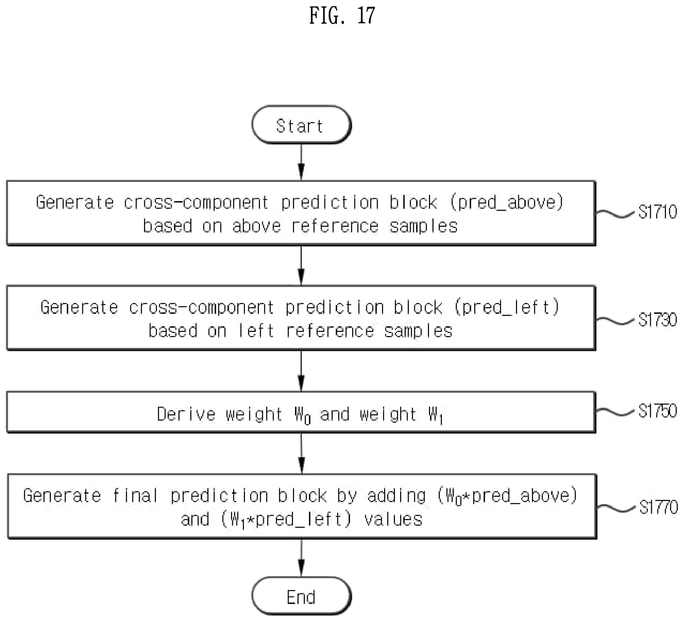

FIG. 17 is a flowchart of an image encoding/decoding method according to an embodiment of the present disclosure. An image encoding apparatus 100 and/or an image decoding apparatus 200 may generate a cross-component prediction block (pred_above) based on above reference samples S1710. Here, a prediction mode used for generating pred_above may be one of LM_A, MMLM_A, CCCM_A or GLM_A. An image encoding apparatus 100 and/or an image decoding apparatus 200 may generate a cross-component prediction block (pred_left) based on left reference samples S1730. Here, a prediction mode used for generating pred_left may be one of LM_L, MMLM_L, CCCM_L or GLM_L. The present disclosure is not limited to the embodiment, and the order of S1710 and S1720 may be changed.

An image encoding apparatus 100 and/or an image decoding apparatus 200 may derive (or calculate) weights w0 and w1 S1750. Afterwards, an image encoding apparatus 100 and/or an image decoding apparatus 200 may generate a final prediction block by adding a value obtained by multiplying weight w0 and pred_above and a value obtained by multiplying w1 and pred_left S1770. In other words, an image encoding apparatus 100 and/or an image decoding apparatus 200 may generate a final prediction block by adding (w0*pred_above) and (w1*pred_left) values.

### Embodiment 2

The present disclosure proposes a method for improving prediction accuracy through the combination of prediction blocks predicted in CCLM, MMLM, CCCM and/or GLM prediction modes regardless of a reference sample area.

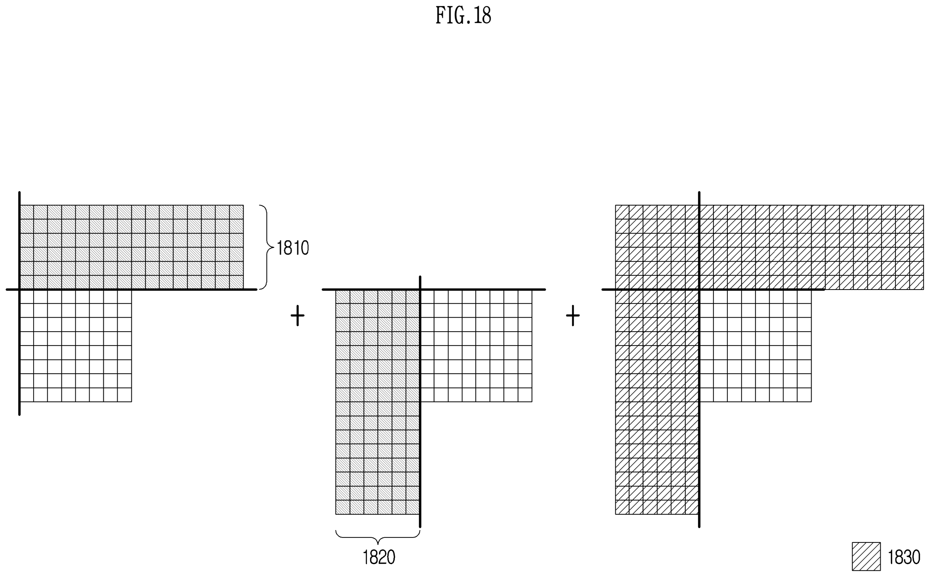

FIG. 18 shows reference samples used for performing cross-component prediction according to an embodiment of the present disclosure. Referring to FIG. 18, the present disclosure proposes a method for generating a more sophisticated intra prediction block (a final prediction block) by combining a prediction block (i.e., the first chroma prediction block) generated after performing cross-component prediction by using only above reference samples 1810, a prediction block (i.e., the second chroma prediction block) generated after performing cross-component prediction by using only left reference samples 1820 and a prediction block (i.e., the third chroma prediction block) generated after performing cross-component prediction by using only above-left reference samples 1830.

A mode for generating a prediction block by using only above reference samples 1810 may include CCLM_A, MMLM_A, CCCM_A and GLM_A. A mode for generating a prediction block by using only left reference samples 1820 may include CCLM_L, MMLM_L, CCCM_L and GLM_L. A mode for generating a prediction block by using only above-left reference samples 1830 may include CCLM, MMLM, CCCM and GLM prediction modes.

The number of reference sample lines used to generate a prediction block may be up to 6 lines. Alternatively, the number of reference sample lines and reference samples used for improved cross-component prediction used in the present disclosure may be the same as the number of reference sample lines and reference sample lines used in the existing CCLM, MMLM, CCCM and/or GLM prediction modes. Alternatively, for the number of reference sample lines used for improved cross-component prediction, the number of reference sample lines used in the existing CCLM, MMLM, CCCM and/or GLM prediction modes may be applied, and a prediction parameter may be calculated by using 1 line, 2 lines or N lines of reference sample lines equally for all cross-component prediction methods. In this case, N may be a value between 1 and a CTU size.

According to an embodiment of the present disclosure, for cross-component prediction using left reference samples, a left cross-component may be calculated by using an above-left reference area 1530, a bottom-left reference area 1540 and a left reference area 1510. Alternatively, a left cross-component may be calculated by using a left reference area 1510.

A new chroma prediction block (i.e., a final prediction block) with improved accuracy may be generated by appropriately combining a prediction block generated by using only above reference samples 1810 (i.e., the first chroma prediction block), a prediction block generated by using only left reference samples 1820 (i.e., the second chroma prediction block) and a prediction block generated by using above-left reference samples 1830 (i.e., the third chroma prediction block). The first chroma prediction block, the second chroma prediction block and the third chroma prediction block may be combined by using the following Equation 19.

【Equation 19】

$$pred = w0 * pred\_above + w1 * pred\_left + w2 * pred\_aboveleft$$

In Equation 19, pred means a combined chroma prediction block (a final prediction block) proposed in this embodiment. pred_above means a prediction block (the first chroma prediction block) obtained by using a cross-component prediction method using only above reference samples. pred_left means a prediction block (the second chroma prediction block) obtained by using a cross-component prediction method using only left reference samples. pred_aboveleft means a prediction block (the third chroma prediction block) obtained by using a cross-component prediction method using above-left reference samples.

In Equation 19, w0 represents a weight applied to pred_above, and w1 represents a weight applied to pred_left. w2 means a weight applied to pred_aboveleft When combining three prediction blocks, a combined prediction sample (a final prediction sample) at the same position may be generated by applying w0, w1 and w2 to each of the samples at the same position in pred_above, pred_left and pred_aboveleft.

In Equation 19, a cross-component prediction method that may be pred_above may include CCLM_A, MMLM_A, CCCM_A and GLM_A modes. A cross-component prediction method that may be pred_left may include CCLM_L, MMLM_L, CCCM_L and GLM_L modes. A cross-component prediction method that may be pred_aboveleft may include a CCLM, a MMLM, a CCCM and a GLM.

According to an embodiment of the present disclosure, pred_above, pred_left and pred_aboveleft may use the same cross-component prediction method. In other words, when the prediction mode of pred_above is CCCM_A, the prediction mode of pred_left may be CCCM_L, and the prediction mode of pred_aboveleft may be a CCCM mode. Alternatively, pred_above, pred_left and pred_aboveleft may use a different cross-component prediction method. For example, when the prediction mode of pred_above is CCLM_A, the prediction mode of pred_left may be MMLM_L, and the prediction mode of pred_aboveleft may be a CCCM mode. Accordingly, a method proposed in the present disclosure may have a total of 64 (=4x4x4) sets of cross-component prediction mode sets.

w0, w1 and w2 applied to Equation 19 may be fixedly determined as in the following Equation 20.

【Equation 20】

$$w2 = 1/2, \; w0 = w1 = 1/4$$

$$w0 = w1 = w2 = 1/3$$

In other words, pred_aboveleft, pred_above and pred_left may be combined at a ratio of 2:1:1 or 1:1:1. Alternatively, as in the following Equation 21, w0, w1 and w2 may be adaptively determined.

【Equation 21】

$$w0 = \alpha, \qquad w1 = \beta, \qquad w2 = 1 - \alpha - \beta$$

In Equation 21, w0 may have a fixed value of $\alpha$, w1 may have a fixed value of $\beta$ and w2 may have a fixed value of 1-$\alpha$-$\beta$. Here, $\alpha$ and $\beta$ may be a real number between 0 and 1. Alternatively, as in the following Equation 22, w0, w1 and w2 may be variably determined.

【Equation 22】

$$w0 = \text{width}/(2 * \text{width} + 2 * \text{height})$$

$$w1 = \text{height}/(2 * \text{width} + 2 * \text{height})$$

$$w2 = 1 - w0 - w1$$

In Equation 22, width means the width of a current chroma block, and height means the height of a current chroma block. For example, for a 16x4 chroma block, w0 may be 16/40=0.4, and w1 may be 4/40=0.1. In this case, w2 may be 0.5.
Alternatively, as in the following Equation 23, w0, w1 and w2 may be variably determined.

【Equation 23】

$$w0 = N_{above}/(2 * N_{above} + 2 * N_{left})$$

$$w0 = N_{left}/(2 * N_{above} + 2 * N_{left})$$

$$w2 = 1 - w0 - w1$$

In Equation 23, $N_{above}$ means the number of above reference samples used for prediction, and $N_{left}$ means the number of left reference samples used for prediction. Alternatively, as in the following Equation 24 or Equation 25, w0, w1 and w2 may be variably determined.

【Equation 24】

$$w0 = \frac{E_{left}}{E_{above} + E_{left} + E_{aboveleft}}$$

$$w1 = \frac{E_{above}}{E_{above} + E_{left} + E_{aboveleft}}$$

$$w2 = 1 - w0 - w1$$

【Equation 25】

$$w0 = \frac{E_{left}}{2 * E_{above} + 2 * E_{left}}$$

$$w1 = 0.5 - w0$$

$$w2 = 0.5$$

In Equations 24 and 25, $E_{above}$ may be an error value between the actual value and the prediction value of a reference sample adjacent to a current chroma block. Here, the prediction value of a neighboring reference sample adjacent to a current chroma block may be a value predicted by using cross-component parameters obtained based on an above reference sample adjacent to a current block. In other words, an image encoding apparatus 100 or an image decoding apparatus 200 may predict the value of a neighboring chroma reference sample through a corresponding luma sample value after obtaining a parameter for predicting a current chroma block by using a CCLM_A, MMLM_A, CCCM_A or GLM_A mode. $E_{above}$ may be calculated through an error between the value of a neighboring chroma reference sample predicted in this way and the value of an actual neighboring chroma reference sample.

When a neighboring chroma reference sample is used to calculate $E_{above}$, at least one of an above reference area 1520, an above-left reference area 1530, an above-right reference area 1550, a left reference area 1510 or a bottom-left reference area 1540 may be used. In order to calculate $E_{above}$, only some of the reference samples of the five areas 1510, 1520, 1530, 1540 and 1550 may be used or the five areas may be combined and used.

The number of reference sample lines used to calculate $E_{above}$ may use the number of reference sample lines of the existing method or may use more reference sample lines. As an example, only a left reference sample may be used or only an above reference sample may be used to calculate $E_{above}$. Alternatively, both a left reference sample and an above reference sample may be used to calculate $E_{above}$. Alternatively, all of an above reference sample, an above-right reference sample and an above-left reference sample may be used to calculate $E_{above}$. Alternatively, an above reference sample, an above-left reference sample, an above-right reference sample, a left reference sample and a bottom-left reference sample may be used to calculate $E_{above}$, and the present disclosure is not limited thereto.

In Equations 24 and 25, $E_{left}$ may be an error value between the actual value and the prediction value of a neighboring reference sample adjacent to a current chroma block. Here, the prediction value of a neighboring reference sample adjacent to a current chroma block may be a value predicted by using cross-component parameters obtained based on a left reference sample adjacent to a current block. In other words, an image encoding apparatus 100 or an image decoding apparatus 200 may predict the value of a neighboring chroma reference sample through a corresponding luma sample value after obtaining a parameter for predicting a current chroma block by using a CCLM_L, MMLM_L, CCCM_L or GLM_L mode. $E_{left}$ may be calculated through an error between the value of a neighboring chroma reference sample predicted in this way and the value of an actual neighboring chroma reference sample.

When a neighboring chroma reference sample is used to calculate $E_{left}$, at least one of an above reference area 1520, an above-left reference area 1530, an above-right reference area 1550, a left reference area 1510 or a bottom-left reference area 1540 may be used. In order to calculate $E_{left}$, only some of the reference samples of the five areas 1510, 1520, 1530, 1540 and 1550 may be used or the five areas may be combined and used.

The number of reference sample lines used to calculate $E_{left}$ may use the number of reference sample lines of the existing method or may use more reference sample lines. As an example, only a left reference sample may be used or only an above reference sample may be used to calculate $E_{left}$. Alternatively, both a left reference sample and an above reference sample may be used to calculate $E_{left}$. Alternatively, all of a left reference sample, a bottom-left reference sample and an above-left reference sample may be used to calculate $E_{left}$. Alternatively, an above reference sample, an above-left reference sample, an above-right reference sample, a left reference sample and a bottom-left reference sample may be used to calculate $E_{left}$, and the present disclosure is not limited thereto.

In Equations 24 and 25, $E_{aboveleft}$ may be an error value between the actual value and the prediction value of a neighboring reference sample adjacent to a current chroma block. Here, the prediction value of a neighboring reference sample adjacent to a current chroma block may be a value predicted by using cross-component parameters obtained based on an above-left reference sample 1830 adjacent to a current block. In other words, an image encoding apparatus 100 or an image decoding apparatus 200 may predict the value of a neighboring chroma reference sample through a corresponding luma sample value after obtaining a parameter for predicting a current chroma block by using a CCLM, MMLM, CCCM or GLM mode. $E_{aboveleft}$ may be calculated through an error between the value of a neighboring chroma reference sample predicted in this way and the value of an actual neighboring chroma reference sample.

When a neighboring chroma reference sample is used to calculate $E_{aboveleft}$, at least one of an above reference area 1520, an above-left reference area 1530, an above-right reference area 1550, a left reference area 1510 or a bottom-left reference area 1540 may be used. In order to calculate $E_{aboveleft}$, only some of the reference samples of the five areas 1510, 1520, 1530, 1540 and 1550 may be used or the five areas may be combined and used.

The number of reference sample lines used to calculate $E_{aboveleft}$ may use the number of reference sample lines of the existing method or may use more reference sample lines. As an example, only a left reference sample may be used or only an above reference sample may be used to calculate $E_{aboveleft}$. Alternatively, both a left reference sample and an above reference sample may be used to calculate $E_{aboveleft}$. Alternatively, an above reference sample, an above-left reference sample, an above-right reference sample, a left reference sample and a bottom-left reference sample may be used to calculate $E_{aboveleft}$, and the present disclosure is not limited thereto.

When calculating $E_{above}$, $E_{left}$ and $E_{aboveleft}$ in Equations 24 and 25, a mean-square error (MSE), the Sum of Absolute Transformed Differences (SATD) or the Sum of Absolute Differences (SAD) may be used. When the number of reference samples used to calculate $E_{above}$, $E_{left}$ and $E_{aboveleft}$ is different, an error value may be adjusted through normalization.

According to an embodiment of the present disclosure, a prediction block (i.e., the first chroma prediction block) generated after performing cross-component prediction by using only above reference samples, a prediction block (i.e., the second chroma prediction block) generated after performing cross-component prediction by using only left reference samples and a prediction block generated after performing cross-component prediction by using above-left reference samples may be combined by using the following Equation 26.

【Equation 26】

$$pred(x, y) = w0(x, y) * pred\_above(x, y) + w1(x, y) * pred\_left(x, y) + w2(x, y) * pred\_aboveleft(x, y)$$

In Equation 26, (x, y) means a coordinate within a chroma block for prediction. In other words, different weights w0, w1 and w2 may be adaptively applied to the position of a sample within a block. For example, as in the following Equation 27, w0, w1 and w2 may be adaptively selected for a sample position.

【Equation 27】

$$- \quad w0(x,y) = (y+1)/(2 \cdot x + 2 \cdot y + 4), \quad w1(x,y) = 0.5 - w0(x,y), \quad w2(x,y) = 0.5$$

$$- \quad w0(x,y) = \frac{1}{4} + \frac{x}{4 \cdot width} - \frac{y}{4 \cdot height}, \quad w1(x,y) = 0.5 - w0(x,y), \quad w2(x,y) = 0.5$$

$$- \quad w0(x,y) = \begin{cases} \frac{1}{4} + \frac{x}{4 \cdot width} - \frac{y}{2 \cdot height}, & if\ E_{above} > K \cdot E_{left} \\ \frac{1}{4} + \frac{x}{2 \cdot width} - \frac{y}{4 \cdot height}, & if\ E_{left} > K \cdot E_{above} \\ \frac{1}{4} + \frac{x}{4 \cdot width} - \frac{y}{4 \cdot height}, & otherwise \end{cases}$$

$$w1(x,y) = 0.5 - w0(x,y), \quad w2(x,y) = 0.5$$

In Equation 27, width and height mean the width and height of a current chroma block, respectively. $E_{above}$ means an error value with a neighboring reference sample value adjacent to an actual chroma block after predicting a neighboring reference sample value adjacent to a current chroma block by using cross-component parameters obtained by using an above reference sample as described above. $E_{left}$ means an error value with a neighboring reference sample value adjacent to an actual chroma block after predicting a neighboring reference sample value adjacent to a current chroma block by using cross-component parameters obtained by using a left reference sample as described above.

A weight in three equations proposed in Equation 27 may be selected in inverse proportion to a distance from each sample position to a left reference sample and/or an above reference sample. Accordingly, the present disclosure may generate a prediction block more precisely and improve encoding efficiency.

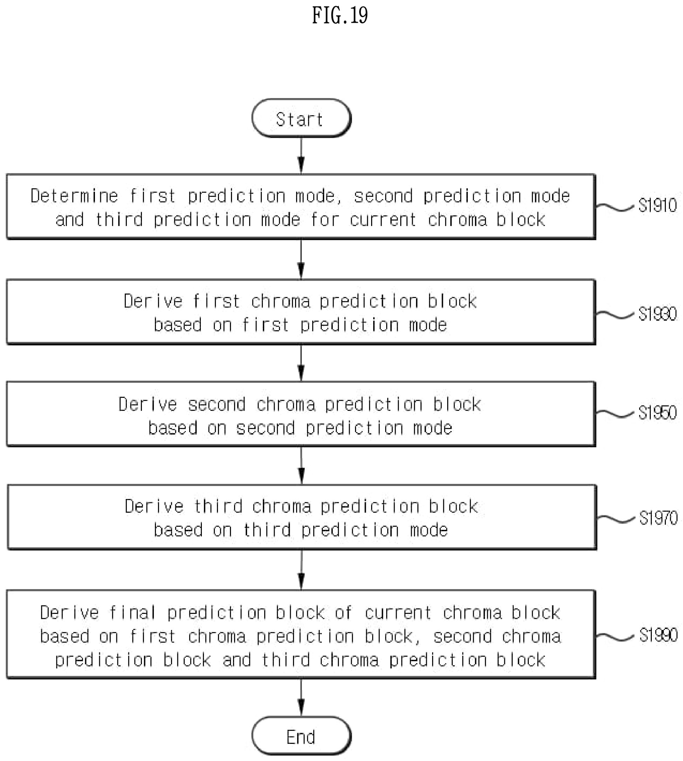

FIG. 19 is a flowchart of an image encoding/decoding method according to an embodiment of the present disclosure. Referring to FIG. 19, an image encoding apparatus 100 and/or an image decoding apparatus 200 may determine the first prediction mode, the second prediction mode and the third prediction mode for a current chroma block S1910. Here, the first prediction mode, the second prediction mode and the third prediction mode may be one of CCLM, CCLM_A, CCLM_L, MMLM, MMLM_A, MMLM_L, CCCM, CCCM_A, CCCM_L, GLM, GLM_A or GLM_L.

An image encoding apparatus 100 and/or an image decoding apparatus 200 may derive the first chroma prediction block based on the first prediction mode S1930. In addition, an image encoding apparatus 100 and/or an image decoding apparatus 200 may derive the second chroma prediction block based on the second prediction mode S1950. In addition, an image encoding apparatus 100 and/or an image decoding apparatus 200 may derive the third chroma prediction block based on the third prediction mode S1970.

The first chroma prediction block may be derived based on at least two of an above reference area, a left reference area or an above-left reference area according to the first prediction mode. The second chroma prediction block may be derived based on at least two of an above reference area, a left reference area or an above-left reference area according to the second prediction mode. The third chroma prediction block may be derived based on at least two of an above reference area, a left reference area or an above-left reference area according to the third prediction mode. Here, an above-left reference area may be a 1530 area in FIG. 15. Alternatively, an above-left reference area may mean an area including all of the 1510, 1520, 1530, 1540 and 1550 areas. S1930, S1950 and S1970 are not limited to the above-described order, and their order may be changed each other.

An image encoding apparatus 100 and/or an image decoding apparatus 200 may derive the final prediction block of a current chroma block based on the first chroma prediction block, the second chroma prediction block and the third chroma prediction block S1990. A final prediction block may be derived by weighted summing the first chroma prediction block, the second chroma prediction block and the third chroma prediction block. Specifically, an image encoding apparatus 100 and/or an image decoding apparatus 200 may determine the first weight applied to the first chroma prediction block, the second weight applied to the second chroma prediction block and the third weight applied to the third chroma prediction block. Based on determined weights, the first chroma prediction block, the second chroma prediction block and the third chroma prediction block may be weighted summed to derive a final prediction block. For example, a final prediction block may be derived based on the above-described Equation 19.

According to the present disclosure, the first weight (i.e., w0), the second weight (i.e., w1) and the third weight (i.e., w2) may be determined based on at least one of a pre-determined value, the size of a current chroma block or a template matching cost. Alternatively, the first weight, the second weight and the third weight may be determined based on the position of a current chroma sample included in a current chroma block. For example, the first weight, the second weight and the third weight may be determined based on one of the above-described Equations 20 to 25 or Equation 27.

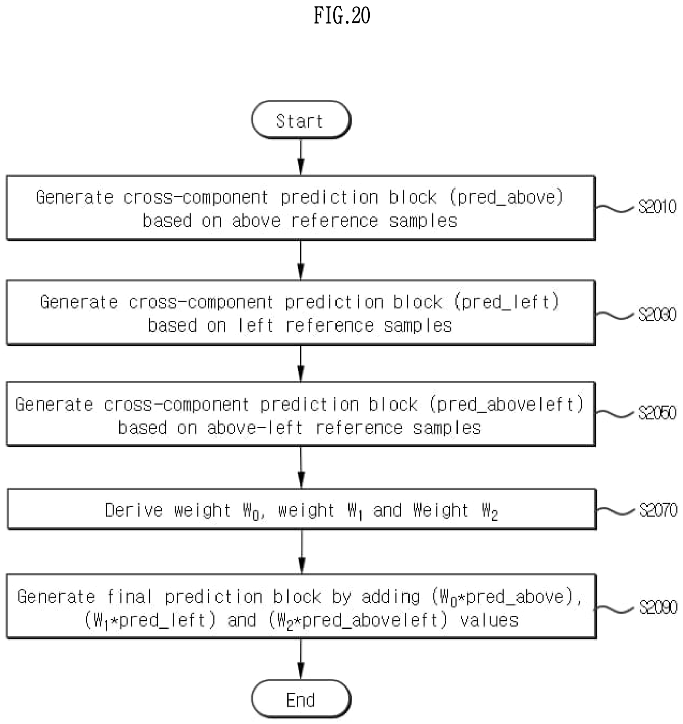

FIG. 20 is a flowchart of an image encoding/decoding method according to an embodiment of the present disclosure. Referring to FIG. 20, an image encoding apparatus 100 and/or an image decoding apparatus 200 may generate a cross-component prediction block (pred_above) based on above reference samples S2010. An image encoding apparatus 100 and/or an image decoding apparatus 200 may generate a cross-component prediction block (pred_left) based on left reference samples S2030. An image encoding apparatus 100 and/or an image decoding apparatus 200 may generate a cross-component prediction block (pred_aboveleft) based on above-left reference samples S2050.

An image encoding apparatus 100 and/or an image decoding apparatus 200 may determine weight w0, weight w1 and weight w2 S2070. Afterwards, an image encoding apparatus 100 and/or an image decoding apparatus 200 may generate a final prediction block by adding (w0*pred_above), (w1*pred_left) and (w2*pred_aboveleft) values. The present disclosure is not limited to the order, and the order of S2010, S2030 and S2050 may be changed each other.

## Embodiment 3

The present disclosure proposes a method for improving prediction accuracy through the combination of prediction blocks regardless of a reference sample area in CCLM, MMLM, CCCM and GLM prediction modes. The present disclosure proposes a method for generating a more sophisticated intra prediction block (a final prediction block) by combining a prediction block (i.e., the first chroma prediction block) generated after performing cross-component prediction by using above reference samples, a prediction block (i.e., the second chroma prediction block) generated after performing cross-component prediction by using left reference samples and a prediction block (i.e., the third chroma prediction block) generated after performing cross-component prediction by using above-left reference samples.

The number of reference sample lines and reference samples used for improved cross-component prediction used in the present disclosure may be the same as the number of reference sample lines and reference sample lines used in the existing CCLM, MMLM, CCCM and/or GLM prediction modes. Alternatively, for the number of reference sample lines used for improved cross-component prediction, the number of reference sample lines used in the existing CCLM, MMLM, CCCM and/or GLM prediction modes may be applied, and a prediction parameter may be calculated by using 1 line, 2 lines or N lines of reference sample lines equally for all cross-component prediction methods. In this case, N may be a value between 1 and a CTU size.

According to an embodiment of the present disclosure, when calculating a cross-component parameter by using above reference samples, an above-left reference area 1530, an above reference area 1520 and an above-right reference area 1550 may be used. Alternatively, when calculating a cross-component parameter by using above reference samples, an above reference area 1520 may be used. Alternatively, when calculating a cross-component parameter by using above reference samples, an above reference area 1520 and an above-right reference area 1550 may be used.

According to an embodiment of the present disclosure, when calculating a cross-component parameter by using left reference samples, an above-left reference area 1530, a left reference area 1510 and a bottom-left reference area 1540 may be used. Alternatively, when calculating a cross-component parameter by using left reference samples, a left reference area 1510 may be used. Alternatively, when calculating a cross-component parameter by using left reference samples, a left reference area 1510 and a bottom-left reference area 1540 may be used.

According to an embodiment of the present disclosure, when calculating a cross-component parameter by using above-left reference samples, a left reference area 1510, an above reference area 1520, an above-left reference area 1530, a bottom-left reference area 1540 and an above-right reference area 1550 may be used. Alternatively, when calculating a cross-component parameter by using above-left reference samples, a left reference area 1510, an above reference area 1520 and an above-left reference area 1530 may be used.

Two or three chroma prediction blocks (i.e., the first chroma prediction block, the second chroma prediction block, the third chroma prediction block) generated by a cross-component prediction method according to the present disclosure may be combined by using the following Equation 28 or Equation 29.

$$【Equation\ 28】$$

$$pred = w0 * pred\_0 + w1 * pred\_1$$

$$【Equation\ 29】$$

$$pred = w0 * pred\_0 + w1 * pred\_1 + w2 * pred\_2$$

In Equations 28 and 29, pred_0, pred_1 and pred_2 may be chroma prediction blocks generated based on the prediction method of one of CCLM, MMLM, CCCM, GLM, CCLM_A, MMLM_A, CCCM_A, GLM_A, CCLM_L, MMLM_L, CCCM_L or GLM_L, respectively. In other words, when combining two chroma prediction blocks, a pred_0 and pred_1 combination of 132 sets may be selected. Alternatively, when combining three chroma prediction blocks, a pred_0, pred_1 and pred_2 combination of 1320 sets may be selected.

w0 and w1 in Equation 28 may be calculated by the same method as a method proposed in the embodiment 1. w0, w1 and w2 in Equation 29 may be calculated by the same method as a method proposed in the embodiment 2.

Alternatively, two or three chroma prediction blocks (i.e., the first chroma prediction block, the second chroma prediction block, the third chroma prediction block) generated by a cross-component prediction method according to the present disclosure may be a chroma prediction block to which a different cross-component prediction method is applied as in the following Equations 30 and 31.

【Equation 30】

$$pred_x = w_x 0 * pred_x\_0 + w_x 1 * pred_x\_1$$

【Equation 31】

$$pred_x = w_x 0 * pred_x\_0 + w_x 1 * pred_x\_1 + w_x 2 * pred_x\_2$$

In Equations 30 and 31, $pred_x$ means a chroma prediction block predicted in a x chroma plane. x may mean a Cb or Cr chroma plane. For a RGB chroma plane, x may mean the chroma plane of one of R, G or B. $w_x 0$, $w_x 1$ and $w_x 2$ mean a weight applied to a chroma prediction block in a x chroma plane. $pred_x\_0$, $pred_x\_1$ and $pred_x\_2$ means a chroma prediction block predicted by a cross-component method in a x chroma plane. In Equations 30 and 31, a method for generating weights ($w_x 0$, $w_x 1$, $w_x 2$) and chroma prediction blocks ($pred_x\_0$, $pred_x\_1$ and $pred_x\_2$) predicted by a cross-component prediction method may be the same as a method in embodiment 1 and/or embodiment 2 described above.

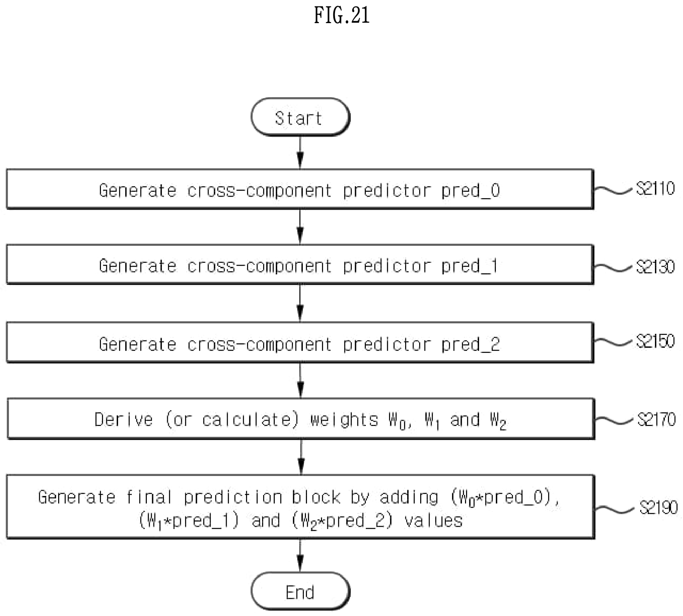

FIG. 21 is a flowchart of an image encoding/decoding method using three chroma prediction blocks according to an embodiment of the present disclosure. Referring to FIG. 21, an image encoding apparatus 100 and/or an image decoding apparatus 200 may generate cross-component predictor pred_0 S2110. A cross-component prediction method used to generate pred_0 may be one of CCLM, MMLM, CCCM, GLM, CCLM_A, MMLM_A, CCCM_A, GLM_A, CCLM_L, MMLM_L, CCCM_L or GLM_L.

An image encoding apparatus 100 and/or an image decoding apparatus 200 may generate cross-component predictor pred_1 S2130. A cross-component prediction method used to generate pred_1 may be one of CCLM, MMLM, CCCM, GLM, CCLM_A, MMLM_A, CCCM_A, GLM_A, CCLM_L, MMLM_L, CCCM_L or GLM_L. However, a cross-component prediction method used to generate pred_0 may be excluded from a cross-component prediction method used to generate pred_1.

An image encoding apparatus 100 and/or an image decoding apparatus 200 may generate cross-component predictor pred_2 S2150. A cross-component prediction method used to generate pred_2 may be one of CCLM, MMLM, CCCM, GLM, CCLM_A, MMLM_A, CCCM_A, GLM_A, CCLM_L, MMLM_L, CCCM_L or GLM_L. However, a cross-component prediction method used to generate pred_0 and pred_1 may be excluded from a cross-component prediction method used to generate pred_2.

An image encoding apparatus 100 and/or an image decoding apparatus 200 may derive (or calculate) weights w0, w1 and w2 S2170. Afterwards, an image encoding apparatus 100 and/or an image decoding apparatus 200 may generate a final prediction block by adding (w0*pred_0), (w1*pred_1) and (w2*pred_2) values S2190. In other words, a final prediction block may be generated by using Equation 28 or Equation 30.

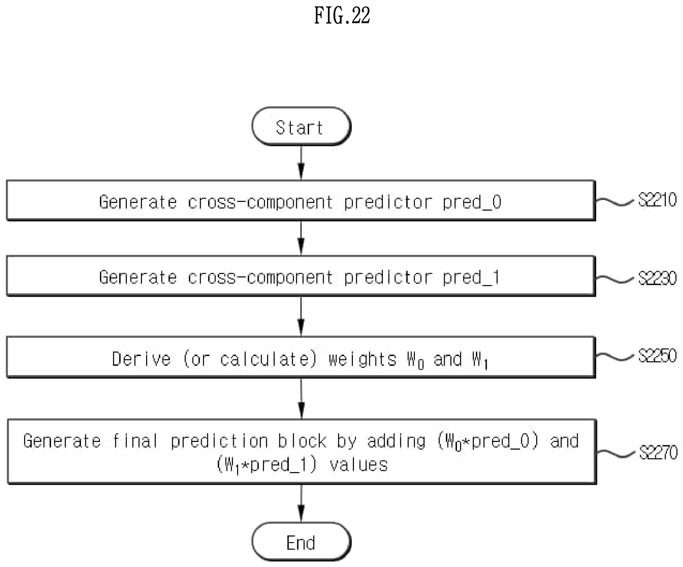

FIG. 22 is a flowchart of an image encoding/decoding method using two chroma prediction blocks according to an embodiment of the present disclosure. Referring to FIG. 22, an image encoding apparatus 100 and/or an image decoding apparatus 200 may generate cross-component predictor pred_0 S2210. A cross-component prediction method used to generate pred_0 may be one of CCLM, MMLM, CCCM, GLM, CCLM_A, MMLM_A, CCCM_A, GLM_A, CCLM_L, MMLM_L, CCCM_L or GLM_L.

An image encoding apparatus 100 and/or an image decoding apparatus 200 may generate cross-component predictor pred_1 S2230. A cross-component prediction method used to generate pred_1 may be one of CCLM, MMLM, CCCM, GLM, CCLM_A, MMLM_A, CCCM_A, GLM_A, CCLM_L, MMLM_L, CCCM_L or GLM_L. However, a cross-component prediction method used to generate pred_0 may be excluded from a cross-component prediction method used to generate pred_1.

An image encoding apparatus 100 and/or an image decoding apparatus 200 may derive (or calculate) weights w0 and w1 S2250. Afterwards, an image encoding apparatus 100 and/or an image decoding apparatus 200 may generate a final prediction block by adding (w0*pred_0) and (w1*pred_1) values S2270. In other words, a final prediction block may be generated by using Equation 28 or Equation 30.

Although the exemplary methods of the present disclosure are expressed as a series of operations for clarity of description, this is not intended to limit the order in which steps are performed, and if necessary, each step may be performed simultaneously or in different order. In order to implement a method according to the present disclosure, another step may be additionally included in an exemplary step or the remaining steps may be included excluding some steps or another additional step may be included excluding some steps.

In the present disclosure, an image encoding apparatus or an image decoding apparatus performing a predetermined operation (step) may perform an operation (a step) for checking a condition or a situation for performing a corresponding operation (step). For example, when it is stated that a predetermined operation is performed when a predetermined condition is satisfied, an image encoding apparatus or an image decoding apparatus may perform an operation for checking whether the predetermined condition is satisfied, and then perform the predetermined operation.

The various embodiments of the present disclosure do not list all possible combinations, but are intended to describe the representative aspect of the present disclosure, and matters described in various embodiments may be applied independently or in a combination of at least two.

In addition, the various embodiments of the present disclosure may be implemented by hardware, firmware, software or a combination thereof. For implementation by hardware, they may be implemented by one or more ASICs (Application Specific Integrated Circuits), DSPs (Digital Signal Processors), DSPDs (Digital Signal Processing Devices), PLDs (Programmable Logic Devices), FPGAs (Field Programmable Gate Arrays), general processors, controllers, microcontrollers, microprocessors, etc.

In addition, an image decoding device and an image encoding device to which an embodiment of the present disclosure is applied may be included in a multimedia broadcasting transmitting and receiving device, a mobile communication terminal, a home cinema video device, a digital cinema video device, a surveillance camera, a video communication device, a real-time communication device such as a video communication, a mobile streaming device, a storage medium, a camcorder, a video-on-demand (VoD) service providing device, an OTT video (Over the top video) device, an Internet streaming service providing device, a three-dimensional (3D) video device, a video phone video device, a medical video device, etc., and may be used to process a video signal or a data signal. For example, an OTT video (Over the top video) device may include a game console, a Blu-ray player, an Internet-connected TV, a home theater system, a smartphone, a tablet PC, a digital video recorder (DVR), etc.

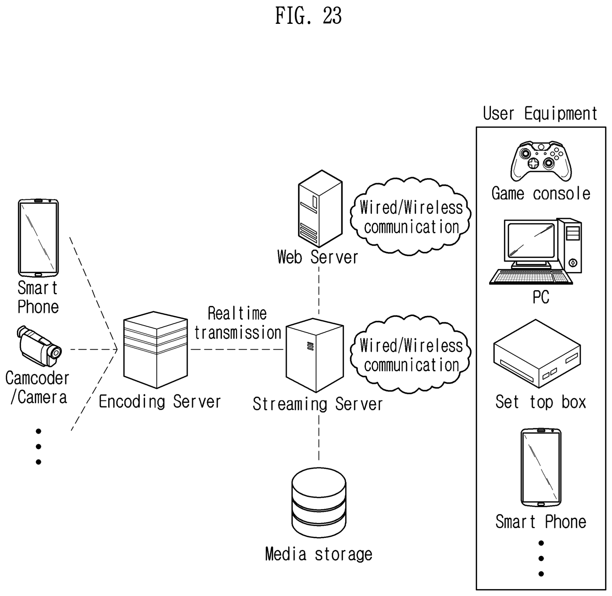

FIG. 23 shows an exemplary diagram of a content streaming system to which an embodiment of the present disclosure may be applied.

As shown in FIG. 23, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the image encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

**Claims**

1. An image decoding method performed by an image decoding apparatus, comprising:

   determining a first prediction mode and a second prediction mode for a current chroma block, wherein the first prediction mode and the second prediction mode are prediction modes for predicting the current chroma block based on a luma block corresponding to the current chroma block;
   deriving a first chroma prediction block based on the first prediction mode;
   deriving a second chroma prediction block based on the second prediction mode; and
   deriving a final prediction block of the current chroma block based on the first chroma prediction block and the second chroma prediction block,
   wherein the first chroma prediction block and the second chroma prediction block are derived based on at least two of an above reference area, a left reference area, or an above-left reference area neighboring the current chroma block.

2. The method of Claim 1, wherein the first prediction mode and the second prediction mode are selected from a Cross-component Linear Model (CCLM) that performs prediction based on the luma block, a Multi-Model Linear Mode (MMLM) that performs prediction by dividing reconstructed neighbor samples into two categories, a Convolutional Cross-Component Model (CCCM) that performs prediction based on a convolutional filter, or a Gradient Linear Model (GLM) mode that performs prediction based on a gradient of a luma sample.

3. The method of Claim 1, wherein the left reference area, the above reference area and the above-left reference area include N reference sample lines, and
   wherein the N has a value less than or equal to a size of the current chroma block.

4. The method of Claim 1, wherein deriving the final prediction block comprises:

   determining a first weight applied to the first chroma prediction block;
   determining a second weight applied to the second chroma prediction block; and
   deriving the final prediction block by weighted summing the first chroma prediction block and the second chroma prediction block based on the first weight and the second weight.

5. The method of Claim 4, wherein the first weight and the second weight are determined based on at least one of a pre-determined value, a size of the current chroma block or a template matching cost.

6. The method of Claim 4, wherein the first weight and the second weight are determined based on a position of a current chroma sample included in the current chroma block.

7. The method of Claim 1, wherein the first chroma prediction block and the second chroma prediction block are derived further based on at least one of an above-right reference area or a bottom-left reference area neighboring the current chroma block.

8. The method of Claim 1, wherein the method further comprises:

   determining a third prediction mode for the current chroma block; and
   deriving a third chroma prediction block based on the third prediction mode, and
   wherein the final prediction block is derived based on the first chroma prediction block, the second chroma prediction block and the third chroma prediction block.

9. An image encoding method performed by an image encoding apparatus, comprising:

   determining a first prediction mode and a second prediction mode for a current chroma block as prediction modes for predicting the current chroma block based on a corresponding luma block;

deriving a first chroma prediction block based on the first prediction mode;
deriving a second chroma prediction block based on the second prediction mode; and
deriving a final prediction block of the current chroma block based on the first chroma prediction block and the second chroma prediction block,
wherein the first chroma prediction block and the second chroma prediction block are derived based on at least two of an above reference area, a left reference area or an above-left reference area neighboring the current chroma block.

10. A computer-readable recording medium storing a bitstream generated by the image encoding method of Claim 9.

11. A method for transmitting a bitstream generated by an image encoding method, the image encoding method comprising:

determining a first prediction mode and a second prediction mode for a current chroma block as prediction modes for predicting the current chroma block based on a corresponding luma block;
deriving a first chroma prediction block based on the first prediction mode;
deriving a second chroma prediction block based on the second prediction mode; and
deriving a final prediction block of the current chroma block based on the first chroma prediction block and the second chroma prediction block,
wherein the first chroma prediction block and the second chroma prediction block are derived based on at least two of an above reference area, a left reference area or an above-left reference area neighboring the current chroma block.

FIG.1

FIG.2

EP 4 648 419 A1

## FIG.3

IMAGE DECODING APPARATUS — 200

BITSTREAM → ENTROPY DECODER (210) → DEQUANTIZER (220) → INVERSE TRANSFORMER (230) → + (235) → FILTER (240) → RECONSTRUCTED IMAGE

INTRA PREDICTOR (265)

INTER PREDICTOR (260)

MEMORY (250)

DPB

EP 4 648 419 A1

FIG.4

```
                    ┌─────────┐
                    │  START  │
                    └────┬────┘
                         │
                         ▼
   ┌──────────────────────────────────────────────────┐
   │ PERFORM PREDICTION (DETERMINE INTRA PREDICTION    │
   │ MODE/TYPE, DERIVE NEIGHBORING REFERENCE SAMPLES,  │─── S410
   │        GENERATE PREDICTION SAMPLES)               │
   └──────────────────────────┬───────────────────────┘
                              │
                              ▼
   ┌──────────────────────────────────────────────────┐
   │   RESIDUAL PROCESS (DERIVE RESIDUAL SAMPLES       │
   │        BASED ON PREDICTION SAMPLES)               │─── S420
   └──────────────────────────┬───────────────────────┘
                              │
                              ▼
   ┌──────────────────────────────────────────────────┐
   │     ENCODE IMAGE/VIDEO INFORMATION INCLUDING      │
   │ PREDICTION INFORMATION AND RESIDUAL INFORMATION   │─── S430
   └──────────────────────────┬───────────────────────┘
                              │
                              ▼
                        ┌─────────┐
                        │   END   │
                        └─────────┘
```

FIG. 5

ORIGINAL PICTURE

185

186

INTRA PREDICTION
MODE/TYPE DETERMINER

187

REFERENCE SAMPLE
DERIVER

RECONSTRUCTED REFERENCE
AREA IN CURRENT PICTURE

188

PREDICTION SAMPLE
DERIVER

INTRA PREDICTOR

INTRA PREDICTION
MODE/TYPE INFORMATION

PREDICTION SAMPLE(S)

FIG. 6

FIG. 7

# FIG. 8

FIG. 9

FIG. 10

α₁=2, β₁=1

α₂=1/2, β₂=−1

Threshold = 17

FIG. 11

## FIG. 12

FIG. 13

| 1 | 0 | -1 | | 1 | 2 | 1 | | 2 | 1 | -1 | | -1 | 1 | 2 |
|---|---|----|----|----|----|----|----|----|----|----|----|----|---|
| 1 | 0 | -1 | | -1 | -2 | -1 | | 1 | -1 | -2 | | -2 | -1 | 1 |

FIG. 14

FIG. 15

FIG. 16

```
                    ┌─────────┐
                    │  Start  │
                    └────┬────┘
                         │
                         ▼
┌────────────────────────────────────────────────────┐
│ Determine first prediction mode and second          │
│ prediction mode for current chroma block            │──── S1610
└────────────────────────┬───────────────────────────┘
                         │
                         ▼
┌────────────────────────────────────────────────────┐
│ Derive first chroma prediction block                │
│ based on first prediction mode                      │──── S1630
└────────────────────────┬───────────────────────────┘
                         │
                         ▼
┌────────────────────────────────────────────────────┐
│ Derive second chroma prediction block               │
│ based on second prediction mode                     │──── S1650
└────────────────────────┬───────────────────────────┘
                         │
                         ▼
┌────────────────────────────────────────────────────┐
│ Derive final prediction block of current chroma     │
│ block based on first chroma prediction block and    │──── S1670
│ second chroma prediction block                      │
└────────────────────────┬───────────────────────────┘
                         │
                         ▼
                    ┌─────────┐
                    │   End   │
                    └─────────┘
```

FIG. 17

```
                        ┌─────────┐
                        │  Start  │
                        └────┬────┘
                             │
                             ▼
┌─────────────────────────────────────────────────┐
│ Generate cross-component prediction block        │      S1710
│ (pred_above) based on above reference samples    │
└─────────────────────┬───────────────────────────┘
                      │
                      ▼
┌─────────────────────────────────────────────────┐
│ Generate cross-component prediction block        │      S1730
│ (pred_left) based on left reference samples      │
└─────────────────────┬───────────────────────────┘
                      │
                      ▼
┌─────────────────────────────────────────────────┐
│ Derive weight $W_0$ and weight $W_1$             │      S1750
└─────────────────────┬───────────────────────────┘
                      │
                      ▼
┌─────────────────────────────────────────────────┐
│ Generate final prediction block by adding        │      S1770
│ ($W_0$*pred_above) and ($W_1$*pred_left) values  │
└─────────────────────┬───────────────────────────┘
                      │
                      ▼
                 ┌─────────┐
                 │   End   │
                 └─────────┘
```

FIG.18

EP 4 648 419 A1

# FIG.19

```
                    ( Start )
                        |
                        v
┌─────────────────────────────────────────────────┐
│  Determine first prediction mode, second         │── S1910
│  prediction mode and third prediction mode for   │
│  current chroma block                            │
└─────────────────────────────────────────────────┘
                        |
                        v
┌─────────────────────────────────────────────────┐
│  Derive first chroma prediction block            │── S1930
│  based on first prediction mode                  │
└─────────────────────────────────────────────────┘
                        |
                        v
┌─────────────────────────────────────────────────┐
│  Derive second chroma prediction block           │── S1950
│  based on second prediction mode                 │
└─────────────────────────────────────────────────┘
                        |
                        v
┌─────────────────────────────────────────────────┐
│  Derive third chroma prediction block            │── S1970
│  based on third prediction mode                  │
└─────────────────────────────────────────────────┘
                        |
                        v
┌─────────────────────────────────────────────────┐
│  Derive final prediction block of current chroma │── S1990
│  block based on first chroma prediction block,   │
│  second chroma prediction block and third        │
│  chroma prediction block                         │
└─────────────────────────────────────────────────┘
                        |
                        v
                     ( End )
```

FIG.20

Start

Generate cross-component prediction block (pred_above) based on above reference samples — S2010

Generate cross-component prediction block (pred_left) based on left reference samples — S2030

Generate cross-component prediction block (pred_aboveleft) based on above-left reference samples — S2050

Derive weight $W_0$, weight $W_1$ and Weight $W_2$ — S2070

Generate final prediction block by adding ($W_0$*pred_above), ($W_1$*pred_left) and ($W_2$*pred_aboveleft) values — S2090

End

FIG.21

```
                          ┌─────────┐
                          │  Start  │
                          └────┬────┘
                               │
                               ▼
┌──────────────────────────────────────────────────────┐
│     Generate cross-component predictor pred_0          │──── S2110
└──────────────────────────────────────────────────────┘
                               │
                               ▼
┌──────────────────────────────────────────────────────┐
│     Generate cross-component predictor pred_1          │──── S2130
└──────────────────────────────────────────────────────┘
                               │
                               ▼
┌──────────────────────────────────────────────────────┐
│     Generate cross-component predictor pred_2          │──── S2150
└──────────────────────────────────────────────────────┘
                               │
                               ▼
┌──────────────────────────────────────────────────────┐
│   Derive (or calculate) weights W_0, W_1 and W_2       │──── S2170
└──────────────────────────────────────────────────────┘
                               │
                               ▼
┌──────────────────────────────────────────────────────┐
│ Generate final prediction block by adding (W_0*pred_0),│──── S2190
│      (W_1*pred_1) and (W_2*pred_2) values              │
└──────────────────────────────────────────────────────┘
                               │
                               ▼
                          ┌─────────┐
                          │   End   │
                          └─────────┘
```

57

FIG.22

```
                    ┌──────────┐
                    │  Start   │
                    └────┬─────┘
                         │
                         ▼
┌────────────────────────────────────────────────────┐
│  Generate cross-component predictor pred_0          │ ～ S2210
└────────────────────────┬───────────────────────────┘
                         │
                         ▼
┌────────────────────────────────────────────────────┐
│  Generate cross-component predictor pred_1          │ ～ S2230
└────────────────────────┬───────────────────────────┘
                         │
                         ▼
┌────────────────────────────────────────────────────┐
│  Derive (or calculate) weights W_0 and W_1          │ ～ S2250
└────────────────────────┬───────────────────────────┘
                         │
                         ▼
┌────────────────────────────────────────────────────┐
│ Generate final prediction block by adding (W_0*pred_0) and │ ～ S2270
│            (W_1*pred_1) values                      │
└────────────────────────┬───────────────────────────┘
                         │
                         ▼
                    ┌──────────┐
                    │   End    │
                    └──────────┘
```

FIG. 23

# INTERNATIONAL SEARCH REPORT

| International application No. |
| --- |
| **PCT/KR2024/000013** |

| A. | CLASSIFICATION OF SUBJECT MATTER |
| --- | --- |

**H04N 19/593**(2014.01)i; **H04N 19/176**(2014.01)i; **H04N 19/11**(2014.01)i; **H04N 19/186**(2014.01)i; **H04N 19/132**(2014.01)i

According to International Patent Classification (IPC) or to both national classification and IPC

| B. | FIELDS SEARCHED |
| --- | --- |

Minimum documentation searched (classification system followed by classification symbols)

H04N 19/593(2014.01); H04N 19/105(2014.01); H04N 19/11(2014.01); H04N 19/52(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 가중치(weight), 예측(predict), 루마(luma), 크로마(chroma), 이웃(neighbor), 참조(reference)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0165205 A (HYUNDAI MOTOR COMPANY et al.) 14 December 2022 (2022-12-14)<br>See paragraphs [0004], [0062], [0097], [0111]-[0115], [0130] and [0155]; claims 1 and 14; and figures 5 and 7. | 1-11 |
| Y | COBAN, Muhammed et al. Algorithm description of Enhanced Compression Model 7 (ECM 7). JVET-AB2025, Joint Video Experts Team (JVET) of ITU-T SG 16 WP 3 and ISO/IEC JTC 1/SC 29, 28th Meeting. Mainz, DE. pp. 1-62, 22 December 2022.<br>See pages 4, 10, 12 and 14. | 1-11 |
| A | KR 10-2022-0082839 A (BEIJING BYTEDANCE NETWORK TECHNOLOGY CO., LTD. et al.) 17 June 2022 (2022-06-17)<br>See claims 1-14. | 1-11 |
| A | KR 10-2022-0006057 A (QUALCOMM INCORPORATED) 14 January 2022 (2022-01-14)<br>See claims 1-11. | 1-11 |
| A | KR 10-2021-0099148 A (HUAWEI TECHNOLOGIES CO., LTD.) 11 August 2021 (2021-08-11)<br>See claims 1-14. | 1-11 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 April 2024** | **03 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/000013**

| Patent document cited in search report | | | Publication date (day/month/year) | Patent family member(s) | | | Publication date (day/month/year) |
|---|---|---|---|---|---|---|---|
| KR | 10-2022-0165205 | A | 14 December 2022 | WO | 2022-260374 | A1 | 15 December 2022 |
| KR | 10-2022-0082839 | A | 17 June 2022 | CN | 114600461 | A | 07 June 2022 |
| | | | | EP | 4035379 | A1 | 03 August 2022 |
| | | | | JP | 2022-553364 | A | 22 December 2022 |
| | | | | JP | 7395727 | B2 | 11 December 2023 |
| | | | | US | 11778175 | B2 | 03 October 2023 |
| | | | | US | 2022-0272330 | A1 | 25 August 2022 |
| | | | | WO | 2021-078178 | A1 | 29 April 2021 |
| KR | 10-2022-0006057 | A | 14 January 2022 | CN | 113785567 | A | 10 December 2021 |
| | | | | EP | 3967034 | A1 | 16 March 2022 |
| | | | | JP | 2022-531333 | A | 06 July 2022 |
| | | | | US | 11695940 | B2 | 04 July 2023 |
| | | | | US | 2022-0248035 | A1 | 04 August 2022 |
| | | | | WO | 2020-227393 | A1 | 12 November 2020 |
| KR | 10-2021-0099148 | A | 11 August 2021 | CN | 113196748 | A | 30 July 2021 |
| | | | | CN | 113196748 | B | 30 December 2022 |
| | | | | EP | 3888354 | A2 | 06 October 2021 |
| | | | | US | 11589055 | B2 | 21 February 2023 |
| | | | | US | 2021-0344931 | A1 | 04 November 2021 |
| | | | | WO | 2020-141984 | A2 | 09 July 2020 |
| | | | | WO | 2020-141984 | A3 | 15 April 2021 |

Form PCT/ISA/210 (patent family annex) (July 2022)